# EUROPEAN PATENT SPECIFICATION

(11) **EP 2 636 159 B1**
(45) Date of publication and mention of the grant of the patent: **20.06.2018**
(21) Application number: 10773629.0
(22) Date of filing: 05.11.2010
(51) Int. Cl.: H04B 7/02

(54) **COMP OPERATION IN CELLULAR COMMUNICATION NETWORKS**
COMP-BETRIEB IN MOBILFUNKNETZEN
FONCTIONNEMENT COMP DANS DES RÉSEAUX DE COMMUNICATION CELLULAIRE

(43) Date of publication of application: 11.09.2013
(73) Proprietor: Telefonaktiebolaget LM Ericsson (publ), 164 83 Stockholm (SE)
(72) Inventor: ÖSTERLING, Jacob, S-175 60 Järfälla (SE)
(74) Representative: Ericsson
(86) International application number: PCT/EP2010/066883
(87) International publication number: WO 2012/059134

(56) References cited:
- EP-A1- 1 705 939
- EP-A1- 2 434 835
- WO-A1-2010/124726
- WO-A2-02/44827
- US-A1- 2010 067 604
- HOYMANN C ET AL: "Distributed Uplink Signal Processing of Cooperating Base Stations Based on IQ Sample Exchange", COMMUNICATIONS, 2009. ICC '09. IEEE INTERNATIONAL CONFERENCE ON, IEEE, PISCATAWAY, NJ, USA, 14 June 2009 (2009-06-14), pages 1-5, XP031505913, ISBN: 978-1-4244-3435-0 cited in the application
- ANDREAS MUÌ LLER ET AL: "Performance of the LTE Uplink with Intra-Site Joint Detection and Joint Link Adaptation", 2010 IEEE VEHICULAR TECHNOLOGY CONFERENCE (VTC 2010-SPRING) - 16-19 MAY 2010 - TAIPEI, TAIWAN, IEEE, US, 16 May 2010 (2010-05-16), pages 1-5, XP031696031, ISBN: 978-1-4244-2518-1 cited in the application
- SUSHANTA DAS ET AL: "Implementation of Full-Diversity Distributed STBC in Cluster-Based Cooperative Communication", VEHICULAR TECHNOLOGY CONFERENCE, 2008. VTC SPRING 2008. IEEE, IEEE, PISCATAWAY, NJ, USA, 11 May 2008 (2008-05-11), pages 1216-1220, XP031255721, ISBN: 978-1-4244-1644-8

## Description

### TECHNICAL FIELD

The invention generally relates to Coordinated MultiPoint (COMP) operation in a cellular communication network.

### BACKGROUND

Coordinated MultiPoint (COMP) transmission/reception is an advanced technology for cellular communication networks to improve coverage, support high data rates, improve cell-edge throughput and/or to increase system throughput.

Downlink COMP generally implies dynamic coordination among multiple geographically separated transmission points, and uplink COMP generally implies coordination among multiple geographically separated reception points. In general, the basic idea is to perform joint transmission in the downlink by coordinating transmission from multiple points to one or more user terminals, and likewise to perform joint detection in the uplink by jointly processing radio signals received at multiple points.

As an intermediate step towards general COMP operation, so-called intra-site cooperation where different sectors of the same radio base station are coordinated has been proposed in reference [2].

It is also possible to coordinate different sectors belonging to different sites, so-called inter-site cooperation, where the data has to be exchanged between the involved radio base stations.

However, inter-site cooperation between different radio base stations provides many challenges on the way to a viable and practical solution, as outlined in reference [1] and [2]. Intra-site cooperation within the same radio base station is much easier to implement, since this approach only requires node internal transfer of data, and the delay due to the cooperation is almost negligible for intra-site cooperation. In addition, intra-site cooperation may already be realized with existing state-of-the art system, at least for the uplink, since no external signaling is involved and no hence further standardization would be required for that purpose.

Reference [1] and [3] describe a concept of distributed cooperation where base stations (BS) communicate directly via a BS-BS interface without central control. A serving base station can request cooperation from one or more supporting base stations, and by collecting In-phase and Quadrature-phase (IQ) samples from the antenna elements of the supporting base station or base stations, the serving base station can virtually increase its number of receive antennas. If the base stations of one eNodeB cooperate the required BS-BS interface can be eNodeB internal. If on the other hand, base stations of different eNodeBs cooperate, the IQ samples are exchanged via the dedicated X2 interface, the specification of which would have to be enhanced. Reference [1] also proposes that the eNodeB may send a request for IQ-samples to a supporting eNodeBs by a multicast message. The current X2 interface does not support multicast messaging. Reference [4] was filed earlier than the present patent /-application but published until after its filing date, and discloses the use of multi cast when a data packet is duplicated and send from a serving base station to other base station supporting in downlink CoMP.

In general, high speed interfaces for inter-site cooperation are costly to deploy.

Although significant advances have been made in this area of research, there is still a general need for improved COMP operation in cellular radio communication networks and in particular with respect to the exchange of IQ samples between radio base stations.

It is another specific object to provide improved radio base stations for Coordinated MultiPoint (COMP) operation in a cellular communication network.

These and other objects are met by embodiments as defined by the accompanying patent claims.

In a first aspect, there is provided a method for Coordinated MultiPoint (COMP) operation for a serving radio base station serving user equipment (UE) in a cellular communication network. The serving radio base station provides In-phase and Quadrature-phase (IQ) samples, referred to as own IQ samples, based on received radio signals including a radio signal originating from an uplink transmission of at least one UE. The serving radio base station joins a multicast group for receiving, via a network interface to a transport network, complementary IQ samples from a supporting radio base station. The complementary IQ samples correspond to received radio signals at the supporting radio base station. The serving radio base station processes own IQ samples and complementary IQ samples to decode user data of the uplink transmission.

There is also provided a radio base station configured for Coordinated MultiPoint (COMP) operation and for serving user equipment (UE) in a cellular communication network. The radio base station comprises an In-phase and Quadrature-phase (IQ) sample provider configured to provide IQ samples, referred to as own IQ samples, based on received radio signals including a radio signal originating from an uplink transmission of at least one UE. The radio base station further comprises a multicast receiver configured to join a multicast group for receiving, via a network interface to a transport network, complementary IQ samples from a supporting radio base station. The complementary IQ samples correspond to received radio signals at the supporting radio base station. The radio base station also comprises an IQ sample processor configured to process own IQ samples and complementary IQ samples to decode user data of the uplink transmission.

In a second aspect, there is provided a method for Coordinated MultiPoint (COMP) operation for a supporting radio base station cooperating with a serving radio base station serving user equipment (UE) in a cellular communication network. The supporting radio base station provides In-phase and Quadrature-phase (IQ) samples, referred to as complementary IQ samples, based on received radio signals including a radio signal originating from an uplink transmission of at least one UE served by the serving radio base station. The supporting radio base station transmits, via a network interface to a transport network, the complementary IQ samples to a multicast group that includes the serving radio base station to enable the serving radio base station to decode user data of the uplink transmission based on the complementary IQ samples together with own IQ samples provided by the serving radio base station.

There is also provided a radio base station, referred to as a supporting radio base station, configured for Coordinated MultiPoint (COMP) operation in cooperation with a serving radio base station serving user equipment (UE) in a cellular communication network. This radio base station comprises an In-phase and Quadrature-phase (IQ) sample provider configured to provide IQ samples, referred to as complementary IQ samples, based on received radio signals including a radio signal originating from an uplink transmission of at least one UE served by the serving radio base station. The radio base station further comprises a multicast transmitter configured to transmit, via a network interface to a transport network, the complementary IQ samples to a multicast group that includes the serving radio base station to enable the serving radio base station to decode user data of the uplink transmission based on the complementary IQ samples together with own IQ samples provided by the serving radio base station.

In this way, there is provided an efficient way of exchanging complementary IQ samples between radio base stations to enable successful decoding of user data. Another benefit is that a supporting radio base station does not need to know how many other base stations that are interested in the IQ samples. A serving radio base station that wants cooperation from a supporting base station joins the appropriate multicast group in order to receive complementary IQ samples from that supporting radio base station.

This solution opens up for a viable and practical solution for inter-site COMP for the uplink in modern cellular communication networks.

Other advantages offered by the invention will be appreciated when reading the below description of embodiments of the invention.

### BRIEF DESCRIPTION OF THE DRAWINGS

The invention, together with further objects and advantages thereof, may best be understood by making reference to the following description taken together with the accompanying drawings, in which:
FIG. 1 is a schematic diagram illustrating an example of inter-site cooperation using the dedicated X2 interface for information exchange between radio base stations according to the prior art.
FIG. 2 is a schematic signaling diagram illustrating an example of signaling between the involved nodes for inter-site cooperation according to the prior art.

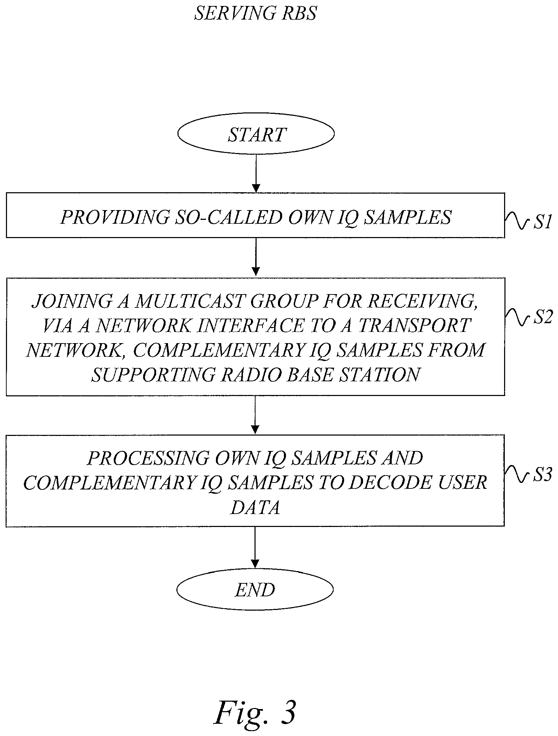

Fig. 3 is a schematic flow diagram illustrating an example of a method for COMP operation for a serving radio base station according to an illustrative embodiment.
Fig. 4 is a schematic flow diagram illustrating an example of a method for COMP operation for a supporting radio base station according to an illustrative embodiment.
Fig. 5 is a schematic flow diagram illustrating an example of a method for COMP operation for a supporting radio base station according to another illustrative embodiment.
Fig. 6 is a schematic flow diagram illustrating an example of a method for COMP operation for a serving radio base station according to another illustrative embodiment.
Fig. 7 is a schematic flow diagram illustrating an example of a method for determining neighbour(s) and joining a multicast group according to an illustrative embodiment.
Fig. 8 is a schematic diagram illustrating an example of radio base stations interconnected through a transport network and configured for exchanging IQ samples by multicast according to an illustrative embodiment.
Fig. 9 is a schematic diagram illustrating an example of a hierarchical communication network.
Fig. 10 is a schematic diagram illustrating another example of a hierarchical arrangement of cells in a cellular communication network.
Fig. 11 is a schematic diagram illustrating an example of a cell structure in which IQ samples related to only a part of the available frequency band are transmitted from one radio base station to another radio base station according to a frequency reuse plan.
Fig. 12 is a schematic diagram illustrating an example of flexible bandwidth configuration and the relation to the number of resource blocks that can be assigned to user equipment (UE) for uplink transmission.
Fig. 13 is a schematic block diagram illustrating an example of a supporting radio base station and a serving radio base station, respectively, configured for COMP operation according to an illustrative embodiment.
Fig. 14 is a schematic block diagram illustrating an example of a supporting radio base station and a serving radio base station, respectively, configured for COMP operation according to another illustrative embodiment.
Fig. 15 is a schematic block diagram illustrating an example of a supporting radio base station and a serving radio base station, respectively, configured for COMP operation according to yet another illustrative embodiment.
Fig. 16 is a schematic block diagram illustrating an example of a supporting radio base station and a serving radio base station, respectively, configured for COMP operation according to still another illustrative embodiment.
Fig. 17 is a schematic block diagram illustrating an example of a supporting radio base station and a serving radio base station, respectively, configured for COMP operation according to a further illustrative embodiment.
Fig. 18 is a schematic block diagram illustrating an example of a serving radio base station according to an illustrative embodiment.

### DETAILED DESCRIPTION

Throughout the drawings, the same reference numbers are used for similar or corresponding elements.

It may be useful to start with a somewhat more detailed overview and analysis of the prior art solutions with respect to COMP operation in cellular radio communication networks.

The idea with COMP is that a serving radio base station (RBS) may utilize one or more supporting COMP RBSs as "repeaters" in the communication with the UE. For the Uplink (UL), the serving RBS thus collects samples received from the COMP RBSs, and includes them in the decoding of the UE. A serving RBS is generally the RBS that has the Radio Resource Control (RRC) connection for the considered UE. A supporting COMP RBS is generally an RBS that operates as a relay for the communication between the UE and the serving RBS.

The idea with COMP is that a serving radio base station (RBS) may utilize one or more supporting COMP RBSs as "repeaters" in the communication with the UE. For the Uplink (UL), the serving RBS thus collects samples received from the COMP RBSs, and includes them in the decoding of the UE. A serving RBS is generally the RBS that has the Radio Resource Control (RRC) connection for the considered UE. A supporting COMP RBS is generally an RBS that operates as a relay for the communication between the UE and the serving RBS.

As previously mentioned, an intermediate step towards general COMP operation involves so-called intra-site cooperation where different sectors of the same radio base station are coordinated, e.g. as described in reference [2]. Intra-site cooperation may already be realized with existing state-of-the art system, at least for the uplink, since no external signaling is involved and no hence further standardization would be required for that purpose.

It is also possible to coordinate different sectors belonging to different sites, so-called inter-site cooperation, where the data has to be exchanged between radio base stations.

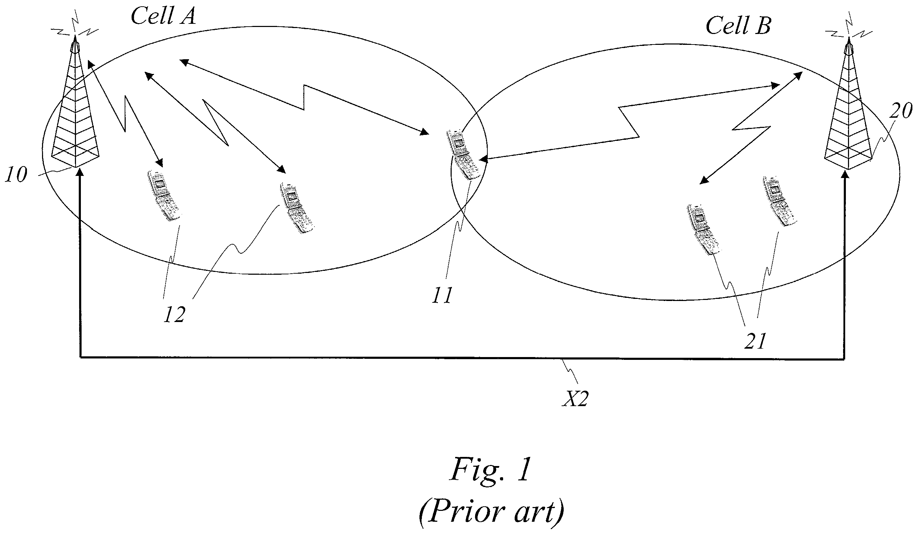

FIG. 1 is a schematic diagram illustrating an example of inter-site cooperation using the dedicated X2 interface for information exchange between radio base stations according to the prior art. In this particular example, there are two cooperating radio base stations 10 and 20. Each radio base station 10 and 20 manages one or more cells or sectors. In this example, radio base station 10 manages cell A, and base station 20 manages cell B. Each radio base station 10 and 20 may thus serve a number of user equipments (UEs), 12 and 21, respectively. There may also be one or more UEs 11 that is/are located in an area of overlapping coverage of two or more cells. Although UE 11 is served by e.g. radio base station 10, the radio base station 20 will also receive radio signals from the same UE. In such a scenario, the radio base station 20 may be referred to as a supporting radio base station, and so-called In-phase and Quadrature-phase (IQ) samples may be transmitted from the supporting radio base station 20 to the serving radio base station via the dedicated X2 interface to improve the chances of successful decoding, as indicated in references [1] and [3].

This may increase coverage and allow successful decoding of an uplink transmission even though UE 11 is located close to the cell border.

In a constellation diagram, a transmitted symbol can be represented and visualized as a complex number. As well known, the real and imaginary axes are referred to as the In-phase (I) and Quadrature-phase (Q) axes, respectively.

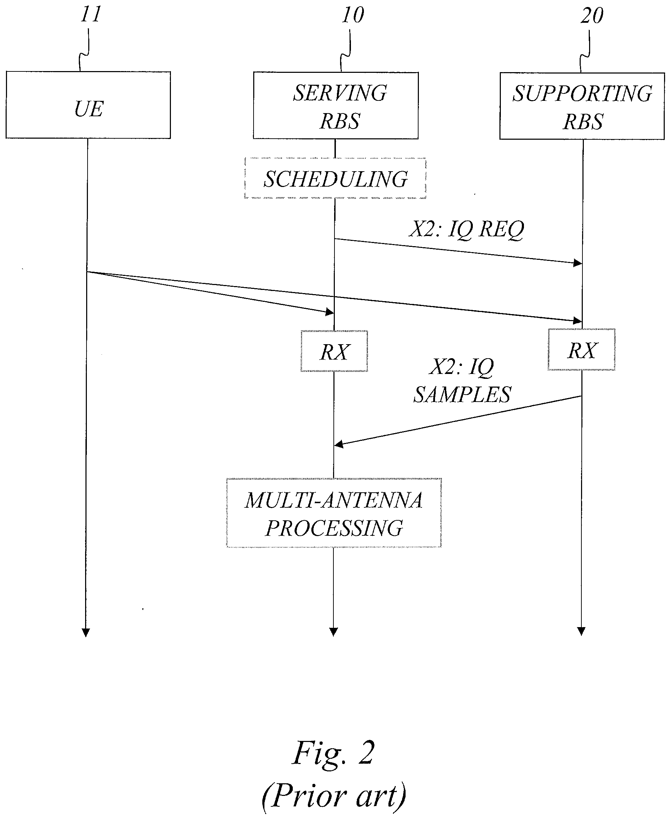

FIG. 2 is a schematic signaling diagram illustrating an example of signaling between the involved nodes for inter-site cooperation according to the prior art.

As outlined in references [1] and [3], a given UE 11 is associated with a serving radio base station (RBS) 10. During scheduling, the serving RBS 10 allocates certain resource blocks to the UE 11 for UL transmission. The serving RBS 10 can request support from one or more radio base stations for a particular UE transmitting on certain resource blocks. The serving RBS 10 requests cooperation from the supporting RBS 20 by sending a request signal (IQ REQ) over the X2 interface, or by sending a multicast message [1]. Having received the UE signal on the indicated RBSs, the supporting RBS 20 transfers IQ samples received at its antennas to the serving RBS 10 over the X2 interface. Having received IQ samples from the supporting RBS 20, the serving RBS 10 jointly processes the received signals of all antennas to enable successful decoding of user data.

In the prior art, the skilled person has chosen to use either intra-site cooperation, relying on eNodeB internal communication, or inter-site cooperation based on a dedicated BS-BS interface to transfer IQ samples between separated radio base stations.

The only feasible solution presented in the prior art for inter-site cooperation in a cellular network assumes the use of high speed interfaces between all radio base stations, or between a central radio equipment control node and multiple remote

In step S1, the serving radio base station provides In-phase and Quadrature-phase (IQ) samples, referred to as own IQ samples, based on received radio signals including a radio signal originating from an uplink transmission of at least one UE. In step S2, the serving radio base station joins a multicast group for receiving, via a network interface to a transport network, complementary IQ samples from a supporting radio base station. The complementary IQ samples correspond to received radio signals at the supporting radio base station. In step S3, the serving radio base station processes own IQ samples and complementary IQ samples to decode user data of the uplink transmission.

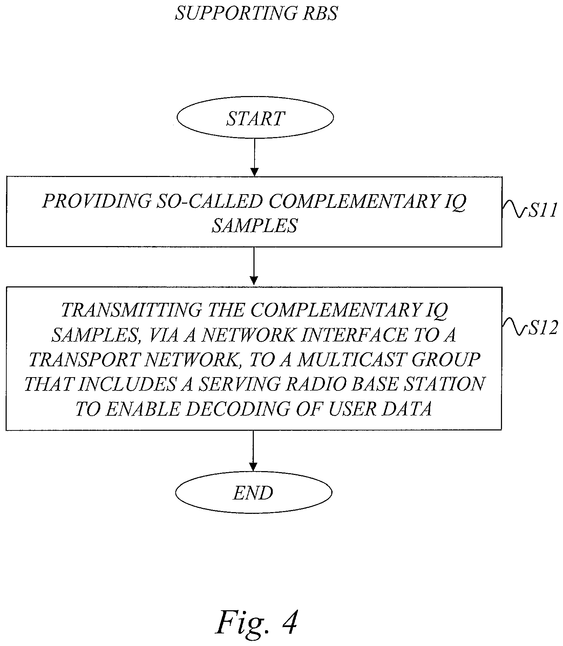

Fig. 4 is a schematic flow diagram illustrating an example of a method for COMP operation for a supporting radio base station according to an illustrative embodiment.

In step S11, the supporting radio base station provides In-phase and Quadrature-phase (IQ) samples, referred to as complementary IQ samples, based on received radio signals including a radio signal originating from an uplink transmission of at least one UE served by the serving radio base station. In step S12, the supporting radio base station transmits, via a network interface to a transport network, the complementary IQ samples to a multicast group that includes the serving radio base station to enable the serving radio base station to decode user data of the uplink transmission based on the complementary IQ samples together with own IQ samples provided by the serving radio base station.

In this way, there is provided an efficient way of exchanging complementary IQ samples between radio base stations to enable successful decoding of user data. This solution opens up for a viable and practical solution for inter-site COMP for the uplink in modern cellular communication networks. This will also offer the general advantages of COMP such as improved cell edge performance and improved average cell throughput.

Another benefit is that a supporting radio base station does not need to know how many other radio base stations that are interested in the IQ samples, and that the bit rate of the interface may be reduced as far as possible. In addition, a supporting radio base station only needs to send the data once, although there may be many client RBSs.

A serving radio base station that wants cooperation from a supporting radio base station joins the appropriate multicast group in order to receive complementary IQ samples from that supporting radio base station. The invention may also provide a reduction of the required bit rate.

The use of multicasting for exchanging IQ samples in the context of COMP operation has never been envisaged in the prior art. On the contrary, the state-of-the-art clearly indicates that dedicated interfaces such as the conventional X2 interface for communication between radio base stations should be used for IQ sample exchange, and that the X2 specification would have to be enhanced.

Typically, the complementary IQ samples may be used as a basis for joint decoding and/or interference cancellation. Preferably, the complementary IQ samples are extracted based on received radio signals including at least a radio signal originating from the considered uplink transmission. A reason for using IQ samples is that they are the least "contaminated". IQ samples normally includes information originating from all UEs, both UEs that a radio base station wants to decode and also UEs that may cause interference (and therefore are of interest for interference cancellation).

Any of a wide variety of conventional techniques for joint decoding and/or interference cancellation can be used together with the invention.

It should also be understood that the IQ samples can be time-domain samples and/or frequency-domain samples.

By way of example, the multicast group may be associated with a cell of the supporting radio base station, and the complementary IQ samples are IQ samples extracted based on received radio signals at the supporting radio base station for this cell. Preferably, the received radio signals at the supporting radio base station includes a radio signal originating from an uplink transmission of at least one UE.

When processing own IQ samples and complementary IQ samples, the serving radio base station typically time-aligns the IQ samples per UE, when required.

In a set of example embodiments, the complementary IQ samples are extracted based on received radio signals at the supporting radio base station only in a selected subset of the available frequency band and/or only from a selected subset of the available antennas in order to reduce the bit rate required.

In other words, when starting from the overall set of IQ samples corresponding to the whole available frequency band and/or all available antennas, the complementary IQ samples are extracted only in a selected subset of the frequency band and/or only from a selected subset of the antennas.

This means that only a limited set of IQ samples is selected for use as complementary IQ samples. The remaining non-selected IQ samples are generally not transmitted.

For example, the multicast group is associated with IQ samples extracted at the supporting radio base station in a selected subset of the available frequency band, and this subset of the available frequency band is also reserved for a subset of UEs served by the serving radio base station. This subset of UEs preferably corresponds to UEs on the uplink for which the serving radio base station will benefit from receiving complementary IQ samples from the supporting radio base station.

In this context it has been recognized that a user located for example at the cell edge or close thereto can not generally make use of the whole frequency band for uplink transmission so that it would be sufficient to schedule the user on a suitable subset of the frequency band.

In one example, the size of the subset of the frequency band can be dynamically adjusted if the traffic so requires. To obtain the desired bit rate reduction, however, the size of the subset is smaller than the whole available frequency band.

This aspect of the invention is generally applicable to COMP operation in modern cellular networks such as Long Term Evolution (LTE) and Wideband Code Division Multiple Access (WCDMA) networks.

For example, the complementary IQ samples for a subset of the available frequency band may be extracted for a selected subset of available carriers.

As indicated, it is also possible, as a complement or as an alternative to the frequency sub-band selection, to reduce the amount of data to be exchanged over the interface by limiting the number of antennas from which IQ samples are forwarded.

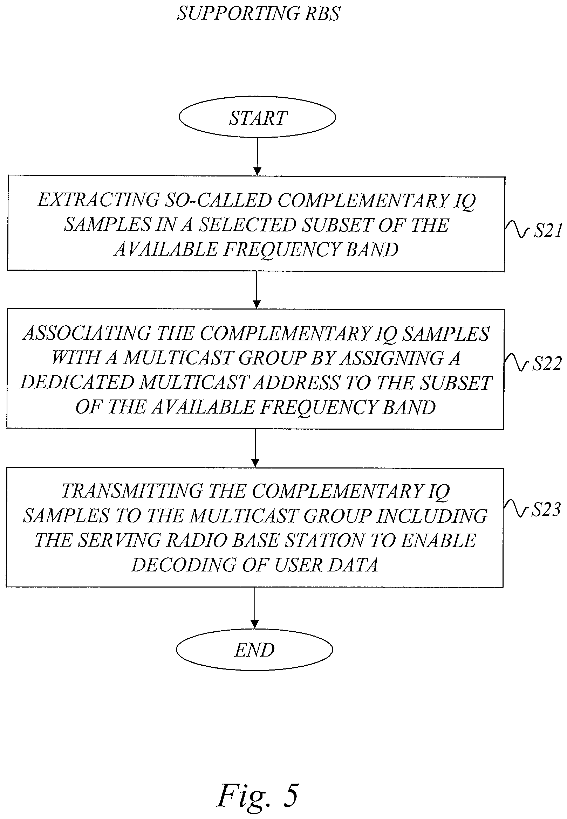

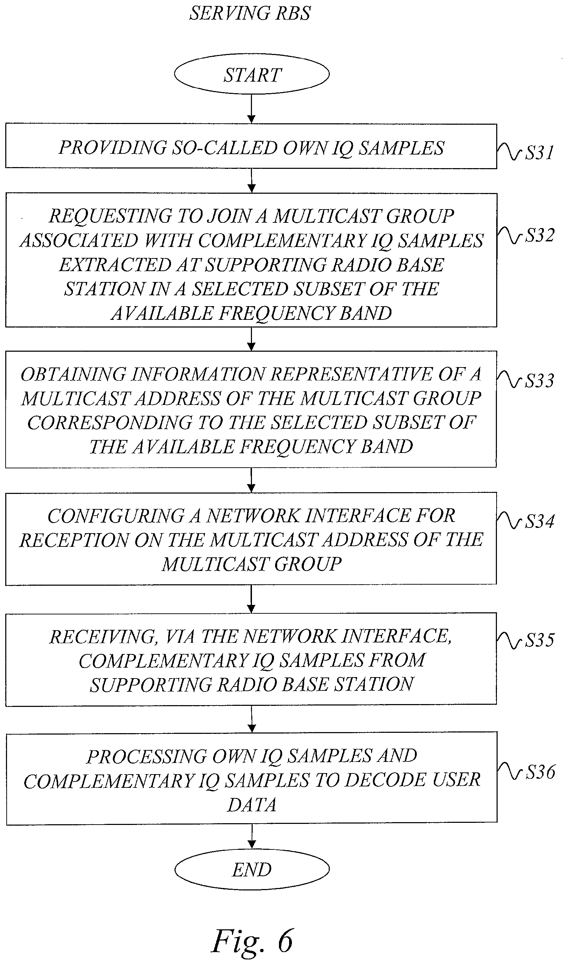

For a better understanding of the frequency sub-band selection aspect, reference will now be made to an illustrative, non-limiting example, referring to Figs. 5 and 6.

Fig. 5 is a schematic flow diagram illustrating an example of a method for COMP operation for a supporting radio base station according to another illustrative embodiment.

In step S21, the supporting radio base station extracts complementary IQ samples in a selected subset of the available frequency band. In step S22, the supporting radio base station associates the extracted complementary IQ samples with a multicast group by assigning a dedicated multicast address to the selected subset of the available frequency band. In step S23, the supporting radio base station transmits the complementary IQ samples to the multicast group including the serving radio base station to enable decoding of user data.

Fig. 6 is a schematic flow diagram illustrating an example of a method for COMP operation for a serving radio base station according to another illustrative embodiment. In step S31, the serving radio base station provides so-called own IQ samples. In step S32, the serving radio base station requests to join a multicast group associated with complementary IQ samples extracted at a supporting radio base station in a selected subset of the available frequency band. In step S33, the serving radio base station obtains information representative of a multicast address of the multicast group corresponding to the selected subset of the available frequency band. In step S34, the serving radio base station configures the network interface for reception on the obtained multicast address of the multicast group. In step S35, the serving radio base station receives, via the network interface to the transport network, the complementary IQ samples from the supporting radio base station. In step S36, the serving radio base station processes the own IQ samples and the received complementary IQ samples to decode user data.

In general, and valid for all embodiments, the serving radio base station may join an additional multicast group for receiving further complementary IQ samples from an additional supporting radio base station over the transport network, wherein such further complementary IQ samples correspond to received radio signals at the additional supporting radio base station, and may be used for joint decoding and/or interference cancellation.

For example, the serving radio base station may determine to join a multicast group based on neighbor list information and/or signal strength measurements.

For example, it is possible to hook this onto the Automatic Neighbour Relations (ANR) feature. The same Domain Name System/Server (DNS) that states the neighbour RBS IP address for X2 based on cell ID could provide the multicast group and multicast address for the cell.

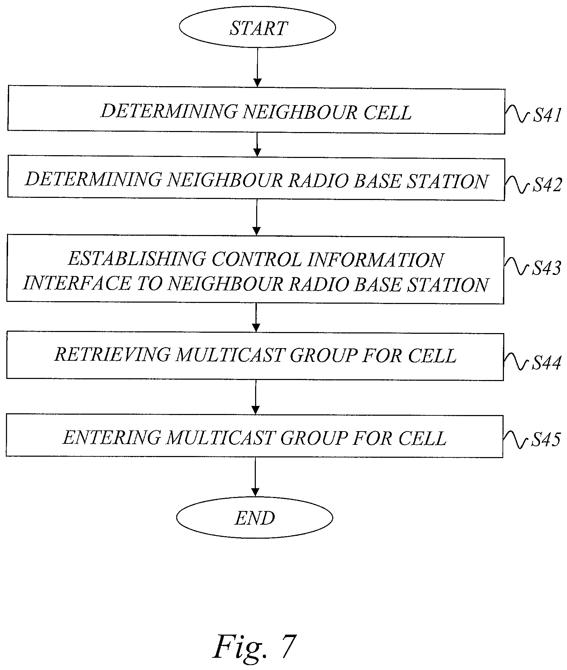

Fig. 7 is a schematic flow diagram illustrating an example of a method for determining neighbour(s) and joining a multicast group according to an illustrative embodiment. In step S41, the serving radio base station determines neighbour cell(s), and in step S42 associated neighbour radio base station(s) are determined. This may e.g. be done by using a conventional ANR request/report and a DNS query/lookup. The serving radio base station then establishes a control information interface to the desired neighbour radio base station(s) in step S43. This interface can e.g. be the conventional X2 interface. The serving radio base station may then ask the neighbour radio base station which multicast group(s) that is/are available, and retrieve the multicast address of the appropriate multicast group for a considered cell over this control information interface in step S44. The serving radio base station may then enter the relevant multicast group in step S45.

It can be determined whether an RBS is interested to subscribe to IQ samples from another RBS, for example based on one or more of the following:
- The cell plan. The operator can configure this.
- The reported neighbour cells by a UE. The measurement reports from a UE which would benefit from a COMP may be used to determine which cells to subscribe to. The UE is typically a weak UE.

A UE having problems with the UL can be scheduled on the frequency which is forwarded from a probable COMP cell. The UE, or its interferer, is looked for in the samples received. If not found, another frequency, belonging to another cell, can be tried. If none of the frequencies is better than the other, the user will not benefit from COMP, at this stage.

For WCDMA, the multicast group to enter could for example be determined beforehand, at cell planning, or determined by the Radio Network Controller (RNC).

It should also be understood that a multicast group normally includes a number of radio base stations. For example, the supporting radio base station will be transmitting complementary IQ samples to a multicast group that also includes an additional serving radio base station to enable this additional serving radio base station to decode user data of an uplink transmission of at least one UE served by the additional serving radio base station based on the complementary IQ samples together with own IQ samples provided by the additional serving radio base station.

For example, a supporting radio base station may have a number of cells, and for each cell the supporting radio base station may have one or more multicast groups for respective parts of the frequency band. A dynamic or configured portion of each cell can be distributed to interested RBS(s), as will be explained in more detail later on.

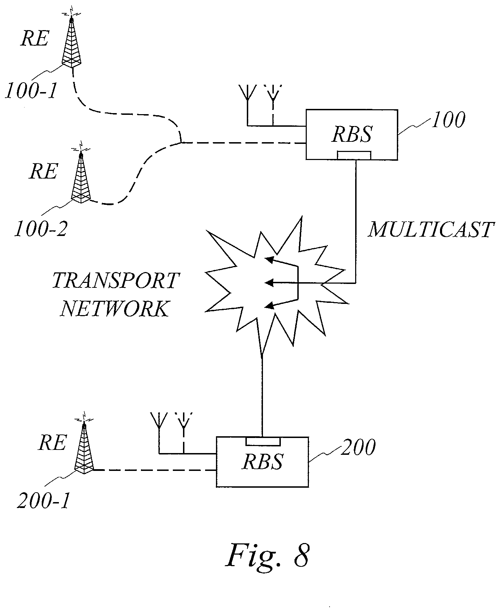

Fig. 8 is a schematic diagram illustrating an example of radio base stations interconnected through a transport network and configured for exchanging IQ samples by multicast according to an illustrative embodiment. In this example, a radio base station (RBS) 100 receives radio signals on its antenna(s) and/or one or more optional remote radio equipment (RE) units 100-1 and 100-2 such as remote radio heads, and provides IQ samples based on the received radio signals. The radio base station may of course process IQ samples for decoding user data on its own, but it may also acts as a so-called supporting radio base station in COMP operation to transfer IQ samples to another so-called serving radio base station (RBS) 200 to assist in the decoding of user data there. In this example, the supporting RBS 100 transmits the so-called complementary IQ samples by multicasting over a transport network. The IQ samples are transmitted, via a network interface to the transport network, to a multicast group that includes the other RBS 200. The RBS 200 is also configured to receive radio signals on its antenna(s) and/or one or more optional remote radio equipment (RE) units 200-1, and provide its own IQ samples. The RBS 200 joins the relevant multicast group to be able to receive the complementary IQ samples from the supporting RBS 100. The RBS 200 may then decode user data by processing own IQ samples together with the complementary IQ samples received over the transport network.

It should be noted that an RBS may at the same time be a Serving RBS for some UEs and a supporting COMP RBS for other UEs. In a system-wide context, it is proposed to configure each RBS to forward at least parts of its UL samples onto the transport network. The samples are tagged with a multicast group tag, and all RBSs interested in receiving the UL samples will join the multicast group, and receive the samples.

For example, it could be possible to use COMP as a coverage extension for low and middle bit rate users, in large cells, with a target to make COMP work for inter-site distances in the range of up to 50 km.

It should be understood that any of a number of conventional multicast techniques may be used with the invention. For example, the multicast group may be a Virtual Local Area Network (VLAN) group or an Internet Protocol (IP) multicast group, and the transport network may be e.g. an Ethernet network or any other suitable transport network.

The transport network connects the radio base stations. Typically, the transport network is Ethernet based. The transport network then normally includes a number of switches to aggregate the traffic. The invention may utilize the fact that the switches normally support port-port switching within the leaf part of the network. More specifically, the switches support broadcast within a VLAN, and multiple VLANs can typically be present on the same port.

By way of example, the multicast may be implemented as a broadcast within a Virtual Local Area Network (VLAN), IQ samples are packaged into Ethernet packets and transmitted as broadcast on the multicast address, where each of the complementary IQ samples are tagged with an associated multicast group tag.

The transport network, e.g. based on Ethernet switches, will combine the flows from different RBSs and give a single interface to each RBS for all its neighbours.

IP multicast is another method, which allows sending of IP datagrams to a group of interested receivers in a single transmission.

The process of joining a multicast group is typically based on retrieving a multicast address corresponding to the multicast group of interest and configuring the network interface for reception on that multicast address.

For example, it is possible to use an Ethernet adapter that specifically enables a given multicast address for reception.

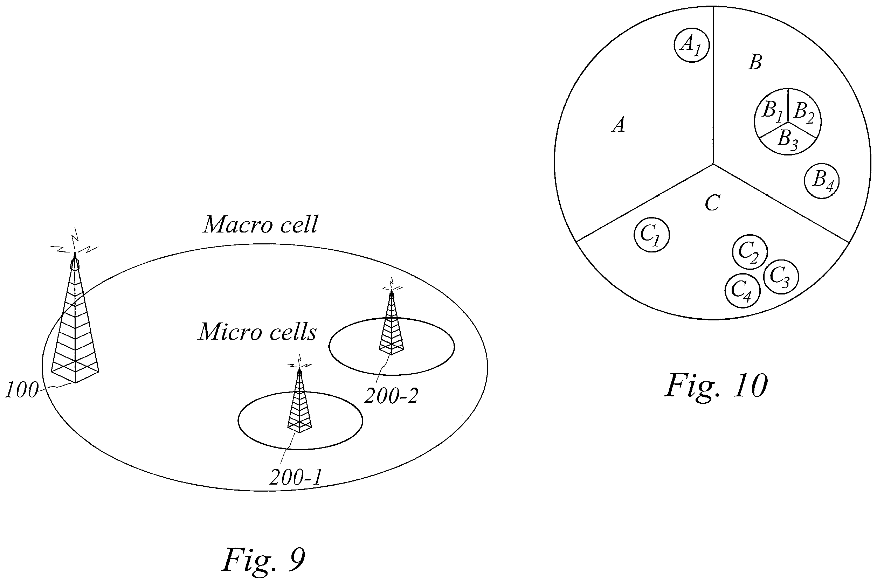

In a set of example embodiments, the supporting radio base station and the serving radio base station are managing cells on different levels in a hierarchical cellular network, as exemplified in Figs. 9 and 10.

Fig. 9 is a schematic diagram illustrating an example of a hierarchical communication network. In this relatively simple example, there is a macro cell under the control of a radio base station 100, and micro cells under the control of respective radio base stations 200-1 and 200-2.

The RBSs 200-1, 200-2 for the micro cells may want to have assistance data from the corresponding macro cell, as the macro cell antennas of the radio base station 100 will detect signal energy from the UEs in the micro cells, but also since the macro cell antennas will detect the interference also seen by the micro cell antennas. The data received from the macro cell antennas will thus allow a micro cell RBS to do a better detection and better interference cancellation.

In this kind of deployment the supporting macro RBS 100 normally has many potential serving micro RBSs 200 requesting assistance. To decrease the total bit rate sent out from the macro RBS 100, multicast on the transport network is utilized. In a particular example, the multicast is implemented as a broadcast within a VLAN, where serving micro RBSs enters the VLAN of the macro cell in order to further decrease the control signaling between the RBSs.

The number of RBSs listening can be substantial in a heterogeneous network, where all micro RBSs are interested in listening to the UL IQ samples of the macro cell it resides under. In such a case, the cost for multicasting a large portion of the received signal of the macro RBS can be motivated.

In the above example, the macro RBS 100 acts as a supporting COMP radio base station and the micro RBSs are respective serving radio base stations. However, it should be understood that there may in principle be cases where a micro RBS may act as a supporting RBS for a serving macro RBS.

Fig. 10 is a schematic diagram illustrating another example of a hierarchical arrangement of cells in a cellular communication network. Within an overall macro coverage area, smaller micro, pico, and possibly femto cells can be deployed. In this particular example, three underlying sectors A, B and C provides macro coverage. In sector A, for example, a smaller single-sector cell A1 is deployed. In sector B, the sector cells B1-B3, and single-sector cell B4 are deployed. In sector C, cells C1-C4 are deployed.

The macro coverage area may be managed by one or more radio base stations. For example, if the entire macro coverage area is managed by a single radio base station, this radio base station (not shown in Fig. 10) may associate each sector A, B, C with a respective multicast group and a radio base station on a lower hierarchical level may join the appropriate multicast group to receive assistance data in the form of complementary IQ samples from the macro radio base station. For example, a radio base station responsible for micro/pico/femto cell B4 may join a multicast group associated with sector B to receive IQ samples extracted from radio signals received in sector B by the macro radio base station.

This type of operation may also be combined with the selection of part of the frequency band and/or part of the available antennas to provide further bit rate savings. For example, a macro cell may be operated at 100 MHz, while a micro cell is operated at 10 MHz, and then it may be desirable to extract and transfer only those IQ samples that are within the relevant frequency band.

The cellular network may look very different in different regions. This is one of the reasons for the need of flexibility of the COMP interconnect and configuration.

As an example, a normal hexagon network plan may be considered with a three sector RBS. In such a configuration, each RBS serves three sectors, each typically having one cell. Each cell is surrounded by six other cells, of which two belong to the same RBS. Each RBS is surrounded by six other RBSs, of which nine cells are neighbouring the own cells. There may also exist other cells added due to hot spot or white spot. A three sector RBS may actually be two or three separate RBSs on the same site, due to limited capacity per RBS. Each RBS may be built up using one or more boards, which may have the cells split between them - each board does not necessarily have the same information about the own RBS antennas, and may not be interested in all the neighbour cells.

Each RBS may be allowed to use the complete frequency band for its transmissions. For UL, it can be a good idea to limit the use of the part distributed to the neighbour RBSs, so this is primarily used for cell-edge users, in both the own and the neighbouring cells.

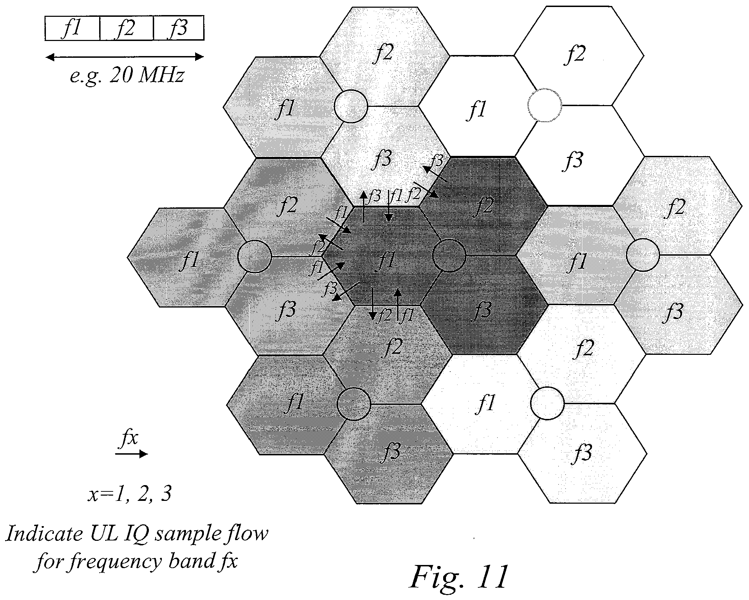

Fig. 11 is a schematic diagram illustrating an example of a cell structure in which IQ samples related to only a part of the available frequency band are transmitted from one radio base station to another radio base station according to a frequency reuse plan.

In a particular example, the supporting radio base station may associate each of a number of cells with one or more multicast groups and extract, for each cell-associated multicast group, complementary IQ samples in a respective subset of the available frequency band for the associated cell, and transmit, via the network interface to the transport network, the complementary IQ samples in the respective subset of the available frequency band to the associated multicast group.

It should also be understood that a multicast group normally includes a number of radio base stations.

In the example illustrated in Fig. 11, a number of radio base stations are arranged to provide an overall cell structure. For example, each radio base station (indicated by small circles) may employ directional sector antennas. In case of N sector antennas on the same radio base station site, each with a different direction, the radio base station site can serve N different sectors, for simplicity also referred to as cells. N is typically 3. It is also possible to use omni-directional antennas, with a radio base station located in the middle of each cell.

To further save bit rate on the transport network interface, only part of the frequency band in each sector/cell is published on the multicast, and optionally also only part of the antennas. Typically, a 1/K reuse is used for the part of the frequency band in the sectors/cells, where K may be an integer such as K=3. Each cell/sector has 1/K of the frequency band reserved for a set of UEs, and receives complementary IQ samples for the uplink for that 1/K of the frequency band from one or more neighboring supporting radio base stations. Similarly, each cell/sector transmits IQ samples for L/K of the frequency band to neighbouring radio base stations, where L may be an integer. By way of example, the number L may depend on the cellular topology and is typically in the range 2-3. For the example when K=3 and L=2, 1/3 (1/K) of the frequency band is reserved for each cell/sector and the radio base station receives IQ data for that 1/3 of the frequency band for each cell/sector, and transmits 2/3 (L/K) of its received IQ data for each cell/sector to other radio base stations. It is also possible to relate L to K such that for example L=K-1.

Each cell is normally informed about what part (e.g. 1/3) of the frequency band it can fetch from neighbour RBSs. For example, the RBS then schedules UEs on the cell border to these frequencies.

The UL IQ samples received from the radio is typically fed through a number of filters. Each filter extracts a respective part of the frequency band. The extracted part is fed onto an interface to the RBS(s) interested in that part of the frequency band.

By way of example, consider the radio base station in the middle of the cell structure. This radio base station has three sector/cells, each of which has a specific part of the frequency band (f1/f2/f3) reserved for a set of UEs (e.g. weak UEs at the cell borders) on the uplink. For the sector/cell with the subset f1 of the frequency band reserved, this sector/cell will benefit from receiving complementary IQ samples from one or more neighbouring sectors/cells (and corresponding neighbouring radio base stations) in this specific part f1 of the frequency band. Similarly, the f1 sector/cell of the radio base station in the middle will be a neighbouring sector/cell to the f2/f3 sectors/cells of other neighbouring radio base stations, and therefore it will be beneficial to transfer IQ samples in these parts f2/f3 of the frequency band to neighbouring radio base stations. The arrows in Fig. 11 indicate uplink IQ sample flows for frequency band fx, where x = 1, 2 or 3. The corresponding fx located in the center of each sector/cell represents the part of frequency band for which the sector/cell will benefit from receiving complementary IQ samples from one or more neighbouring radio base stations.

In an extension, the cellular structure of the radio access network is preferably exported to the transport network by allocating at least one multicast group to each cell in the relevant parts of the cellular network.

In a particular example, the IQ samples can be packaged into Ethernet packets, and use (VLAN) broadcast to save BW. Each part (e.g. 1/3) of the bandwidth of a cell is given a multicast group (VLAN) address. The UL IQ samples are transmitted as broadcast on that address. RBSs interesting in receiving such data enter the group.

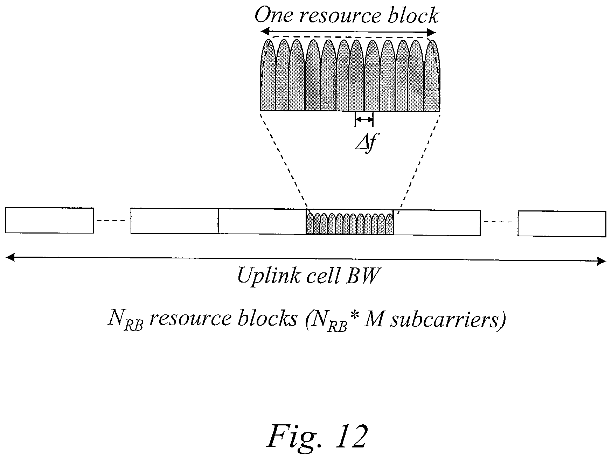

Fig. 12 is a schematic diagram illustrating an example of flexible bandwidth configuration and the relation to the number of resource blocks that can be assigned to user equipment (UE) for uplink transmission. This is merely an example, valid to for example LTE uplink transmission. Each resource block includes a number M of subcarriers, with a subcarrier spacing *Δf*. The uplink cell bandwidth can then be defined as *N_{RB}* resource blocks. This illustrates an example of the frequency-domain structure for the uplink. For the LTE uplink, for example, M is usually 12 and the subcarrier spacing equals 15 kHz. LTE physical-layer specification allows for, in essence, any number of uplink resource blocks (although typically ranging from a minimum of 6 resource blocks up to a maximum of 110 resource blocks) to cater for a high degree of flexibility in terms of the overall cell bandwidth.

The invention is also applicable for WCDMA. WCDMA typically operates based on multiple WCDMA carriers. For example, a radio base station may operate on 4 WCDMA carriers using the same radio unit. Each UE may use one of the WCDMA carriers as an anchor carrier but may be ordered to transmit or receive also on other WCDMA carriers, so called multi-carrier operation.

For example, the extracted subset of the total received frequency band may in a particular example include one or possibly more WCDMA carriers. The case of a radio base station serving 3 WCDMA carriers may be illustrated by figure 11, with the interpretation that fx indicates WCDMA carrier x. In the illustrative example of Fig. 11, each cell may e.g. select one WCDMA carrier to be used for weak UEs, and receives complementary IQ samples from RBSs with neighbouring cells.

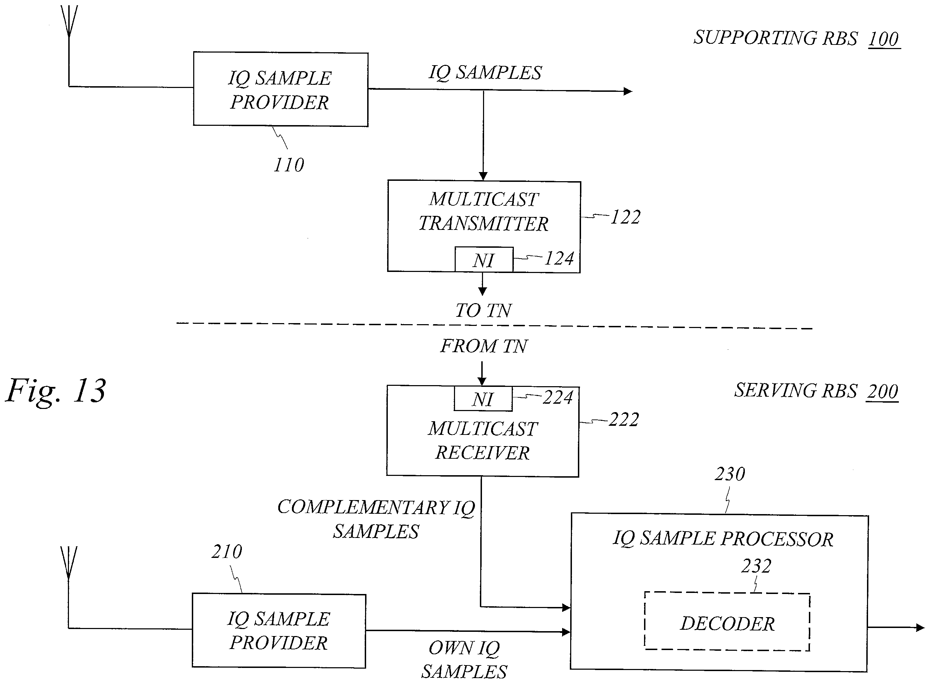

Fig. 13 is a schematic block diagram illustrating an example of a supporting radio base station 100 and a serving radio base station 200, respectively, configured for COMP operation according to an illustrative embodiment.

The supporting radio base station (RBS) 100 comprises an IQ sample provider 110 configured to provide IQ samples, referred to as complementary IQ samples, based on received radio signals including a radio signal originating from an uplink transmission of at least one UE served by the serving radio base station 200. The RBS 100 also comprises a multicast transmitter 122 configured to transmit, via a network interface 124 to a transport network (TN), the complementary IQ samples to a multicast group that includes the serving RBS 200 to enable the serving RBS to decode user data of the uplink transmission based on the complementary IQ samples together with own IQ samples.

The serving RBS 200 comprises an IQ sample provider 210 configured to provide own IQ samples based on received radio signals including a radio signal originating from an uplink transmission of at least one UE. The RBS 200 also comprises a multicast receiver 222 configured to join a multicast group for receiving, via a network interface 224 to the transport network (TN), the complementary IQ samples from the supporting RBS 100. The serving RBS 200 further comprises an IQ sample processor 230 configured to process the own IQ samples and the complementary IQ samples to decode user data of the uplink transmission. The IQ sample processor 230 thus includes a general decoder 232.

Well-known standard circuitry including basic transmission/reception circuitry and standard processing capabilities of a radio base station will not be described, unless for its relevance to COMP operation of the present invention.

The multicast group may be associated with a cell of the supporting radio base station, and in that case the IQ sample provider 110 is configured to extract the complementary IQ samples based on received radio signals at the supporting radio base station for that cell.

The bit rate saving provided by the multicast feature allows more data to be output from the supporting RBS, even in the case of multiple serving RBSs. The multicast may also save costs in the interface adaptation due to less hardware being required.

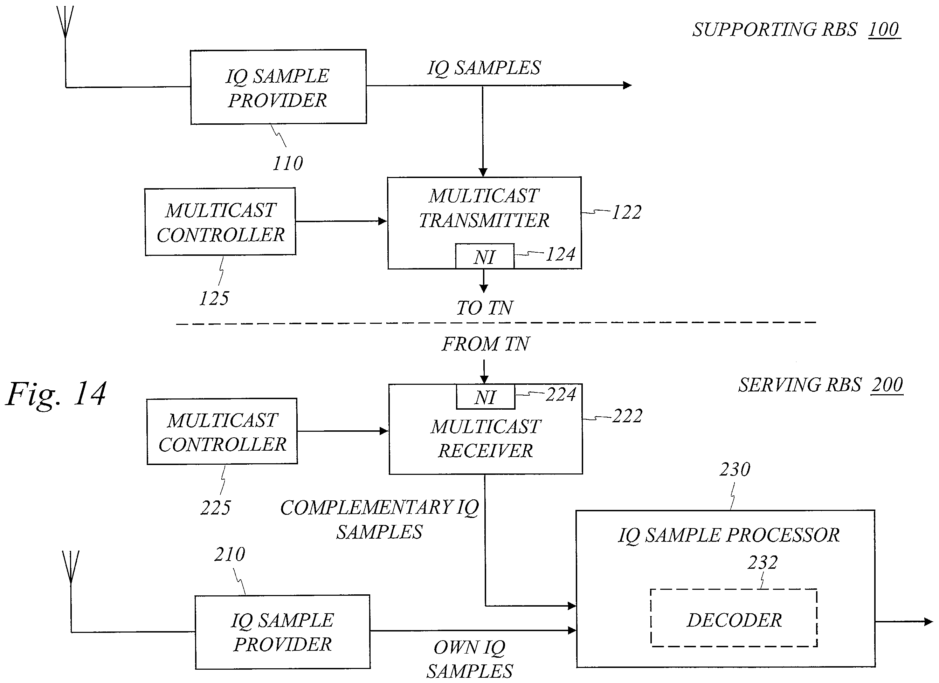

Fig. 14 is a schematic block diagram illustrating an example of a supporting radio base station and a serving radio base station, respectively, configured for COMP operation according to another illustrative embodiment. In this example, the supporting radio base station 100 comprises a multicast controller 125, which may be located separate from, but interconnected with the multicast transmitter 122, or alternatively integrated with the multicast transmitter 122. The multicast controller 125 controls the operation/configuration of the multicast transmitter 122, and may also be responsible for communicating with other radio base stations wanting to join a multicast group.

Similarly, the serving radio base station 200 comprises a multicast controller 225, which may be located separate from, but interconnected with the multicast receiver 222, or alternatively integrated with the multicast receiver 222. The multicast controller 225 of the serving RBS 200 is preferably configured for requesting to join a multicast group, for obtaining a corresponding multicast address, and for configuring the network interface 224 for reception on the multicast address of the multicast group.

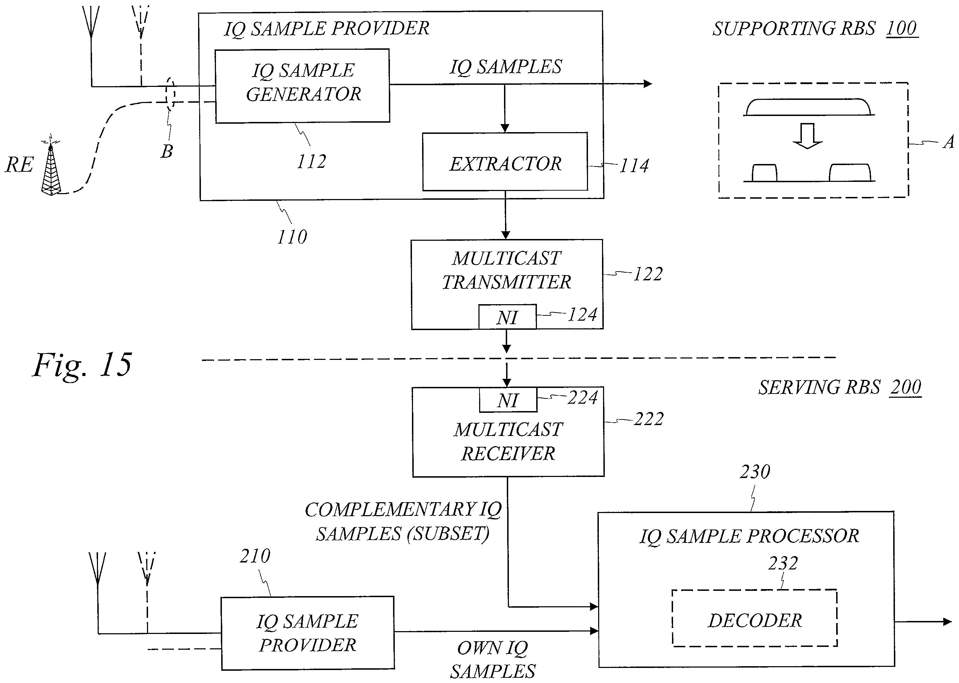

Fig. 15 is a schematic block diagram illustrating an example of a supporting radio base station and a serving radio base station, respectively, configured for COMP operation according to yet another illustrative embodiment. In this example, the IQ sample provider 110 of the supporting RBS 100 comprises an IQ sample generator 112, and also an extractor 114 configured to extract complementary IQ samples in a selected subset of the available frequency band (A) and/or from a selected subset of the available antennas (B).

As illustrated in the dashed square denoted by A in Fig. 15, the extractor 114 may select a suitable part or subset of the frequency band of the receiver and extract IQ samples for this subset. For example, the extractor 114 may be configured to extract the complementary IQ samples only for a selected subset of the available carriers.

The supporting RBS 100 may also have several antennas and/or optionally also remote radio equipment (RE) units. As illustrated by the dashed circle denoted by B, the extractor 114 may as an alternative or as a complement select a suitable subset of the antennas and extract IQ samples only for the selected subset of antennas.

This will provide significant savings of bit rate for the transport network interface.

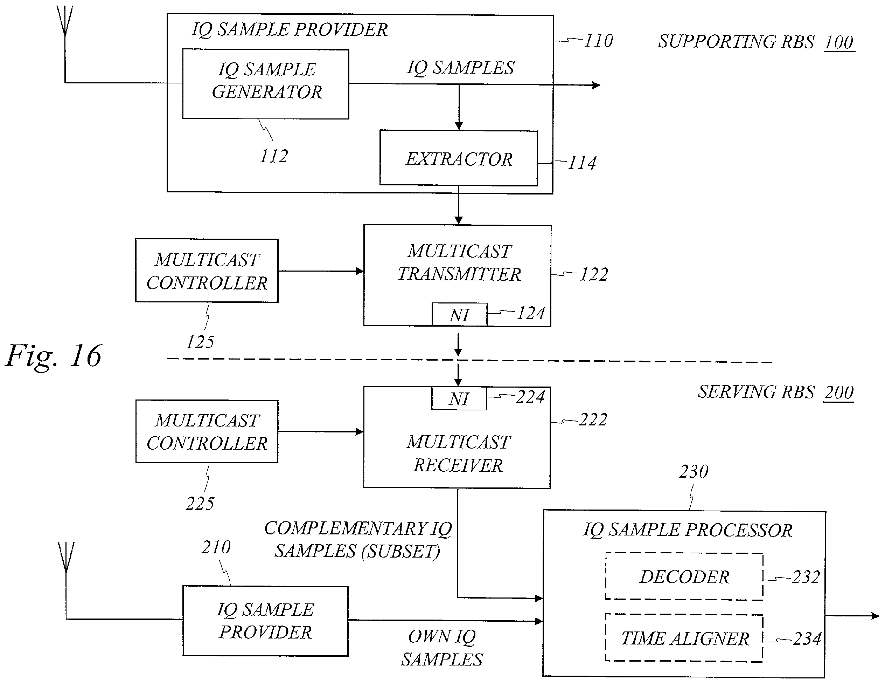

Fig. 16 is a schematic block diagram illustrating an example of a supporting radio base station and a serving radio base station, respectively, configured for COMP operation according to still another illustrative embodiment. In this embodiment, the supporting RBS 100 comprises a multicast controller 125 associated with the multicast transmitter 122, and the IQ sample provider 110 comprises an IQ sample generator 112 and also an extractor 114 for extracting complementary IQ samples in a selected subset of the available frequency band and/or from a selected subset of the available antennas.

The serving RBS 200 comprises a multicast controller 225 associated with the multicast receiver 222, in similarity to the embodiment of Fig. 14. Further, the IQ sample processor 230 of the serving RBS 200 optionally comprises a time aligner 234 for time-aligning own IQ samples and complementary IQ samples per UE, when required.

For the case, when the multicast group is associated with IQ samples extracted at the supporting RBS 100 in a selected subset of the available frequency band, the RBS 100 and more particularly the multicast controller 125 may associate the complementary IQ samples with the multicast group by assigning a dedicated multicast address to the relevant subset of the frequency band.

The multicast controller 225 of the serving RBS 200 is then configured for requesting to join the multicast group and for obtaining information representative of the multicast address assigned to the multicast group corresponding to this subset of the available frequency band, and for configuring the network interface 224 for reception on this multicast address.

By way of example, the supporting RBS 100 may be configured to associate each of a number of cells with at least one multicast group and the IQ sample provider 110 is configured to extract, for each of the multicast group(s), complementary IQ samples in a respective subset of the available frequency band. The multicast transmitter 122 is then configured to transmit, via the network interface 124 to the transport network, the complementary IQ samples in the respective subset of the available frequency band to the associated multicast group.

The radio base stations may thus be configured for operation in a cellular structure similar to that of Fig. 11.

The serving radio base station 200 may be configured for determining to join a multicast group based on neighbor list information and/or signal strength measurements, e.g. as previously discussed.

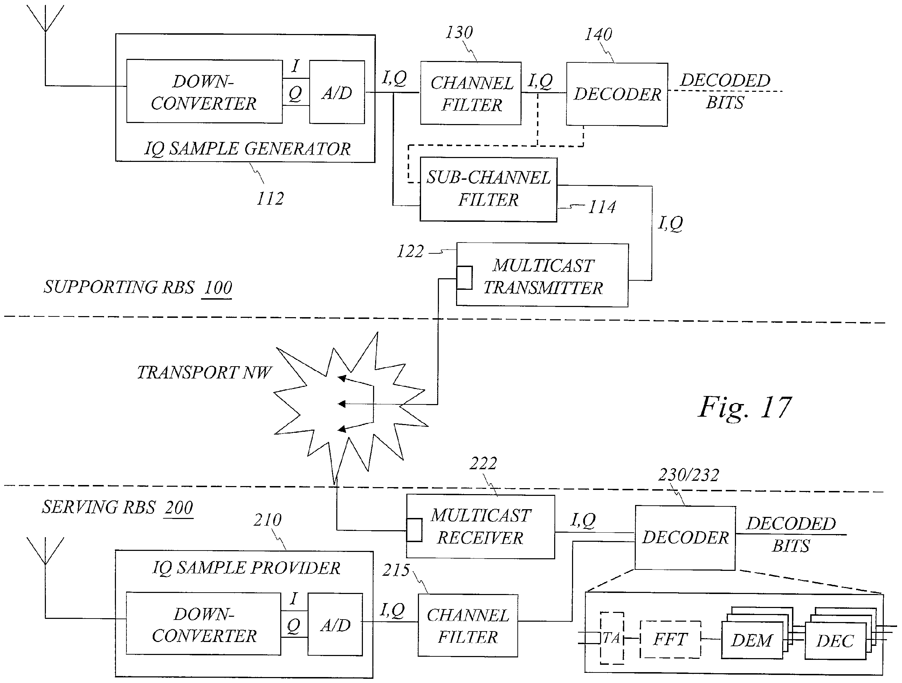

Fig. 17 is a schematic block diagram illustrating an example of a supporting radio base station and a serving radio base station, respectively, configured for COMP operation according to a further illustrative embodiment.

In this particular example, the supporting RBS 100 includes an IQ sample generator 112, an extractor in the form of a sub-channel filter 114, and a multicast transmitter/network interface 122, a conventional channel filter 130 and a decoder 140.

The IQ sample generator 112 is based on a conventional down-converter for downconverting the received radio signals from carrier frequency to baseband and providing analogue IQ signals, and an A/D converter for converting the analogue IQ signals into digital IQ samples. The IQ samples may then be transferred to the conventional channel filter 130 and subsequent decoder 140 to provide decoded bits.

As mentioned, the supporting RBS 100 also comprises an extractor in the form of one or more sub-channel filters 114 configured to extract IQ samples in a respective subset of the available frequency band.

The sub-channel filter 114 is connected to the multicast transmitter 122 to allow transfer of these so-called complementary IQ samples over the transport network to the serving RBS 200. A multicast group is associated with the IQ samples extracted in the respective subset of the available frequency band. This subset of the available frequency band is also reserved for a subset of UEs served by the serving radio base station 200. This may for example be a subset of UEs on the uplink for which the serving RBS 200 will benefit from receiving complementary IQ samples from the supporting RBS 100.

In this example, the idea is thus to introduce at least one additional channel filter, configured to filter out a subset of the total bandwidth of the receiver. The IQ samples out from this sub-channel filter are sent onto a transport network to another RBS and fed into the digital receiver of this RBS.

The sub-channel filter 114 may take IQ samples in the time-domain and/or frequency-domain as input, and may take IQ samples from the output of the IQ sample generator 112, the channel filter 130 and/or from one of the stages within the decoder 140.

The sub-channel filter can be implemented in a variety of different ways. For example, the sub-channel filter may be realized as:
- A filter within the radio unit of the RBS. For instance, if the invention is applied in a WCDMA system with support for 3 carriers of 5MHz each, the sub-channel filter may filter out one or two of the WCDMA carriers. The sub-channel filter can then be the same filter as one of the per-carrier filters in the radio. The interface to the transport network can then be located either in the radio or in the baseband (BB) unit of the RBS.
- The sub-channel filter can be a digital filter, such as a FIR filter, in the base band unit. The filter then typically operates on the same IQ samples as sent to the digital receiver/decoder.
- The sub-channel filter can also be implemented as a Fast Fourier Transform (FFT) in the supporting RBS 100 and a corresponding Inverse FFT (IFFT) in the serving RBS 200, where only a part of the frequency domain samples are sent over the transport network. The advantage is that the frequency band that the sub-channel filter cuts out can be disjunct. For instance, a part of the frequency band used by LTE for the Physical Uplink Shared Channel (PUSCH) is filtered out as well as the frequency band used for the Physical Uplink Control Channel (PUCCH).

In addition, it is also possible to provide a realization by which only a portion of the available antennas of the supporting RBS 100 may be subject to the sub-channel filter, to decrease the interface load and hardware cost.

The serving RBS 200 includes an IQ sample provider 210, a conventional channel filter 215, a multicast receiver 222, and a decoder 230/232.

The IQ sample provider 210 is based on a conventional down-converter for downconverting the received radio signals from carrier frequency to baseband and providing analogue IQ signals, and an A/D converter for converting the analogue IQ signals into digital IQ samples. The IQ samples may then be transferred to the conventional channel filter 215 and subsequent decoder 230/232.

The multicast receiver 222 is configured to receive complementary IQ samples, via a network interface to the transport network, for a desired multicast group. The decoder 230/232 is configured to process the received complementary IQ samples and the IQ samples from the channel filter 215 to provide decoded bits.

In general, the decoder includes a time aligner (TA) for time-aligning own IQ samples and complementary IQ samples per UE, when required. The time-alignment function may alternatively be performed prior to the channel filter 215.

The decoder may be different for each standard. In LTE, for example, the decoder includes a cell global FFT. The FFT is synchronous to the air interface and is executed once every received symbol. One demodulator (DEM) is normally executed per UE, where the demodulator may perform diversity combining, equalization, frequency compensation and other algorithms to best determine the likely received symbols. The soft values from each demodulator are then sent to a respective decoder (DEC) unit, which takes a "final" decision of the received bits.

For LTE, for example, the UL receiver normally begins with a large FFT, over the whole band. All UEs are preferably time aligned, within the cyclic prefix (CP), typically in the order of 4µs. It is proposed to transfer UL IQ samples from the supporting RBS, and let the serving RBS align the FFTs for a certain user. This also reduces the need for control signaling between the serving and supporting RBS, and any software complexity associated with supporting RBS needing to know the UEs of the serving RBS.

In WCDMA, the IQ samples are normally fed directly into a per-UE specific demodulator, which includes, in addition to the demodulator of LTE, a rake receiver for despreading the CDMA signal.

In general, any of a number of conventional multicast techniques may be used with the invention. For example, the multicast group may be a Virtual Local Area Network (VLAN) group or an Internet Protocol (IP) multicast group, and the transport network may be e.g. an Ethernet network or any other suitable transport network.

As previously explained, the radio base stations 100 and 200 may be on different levels in a hierarchical cellular network. For example, the serving radio base station 200 may be a micro cell radio base station configured for cooperation with the supporting radio base station 100, which is in the form of a macro cell radio base station.

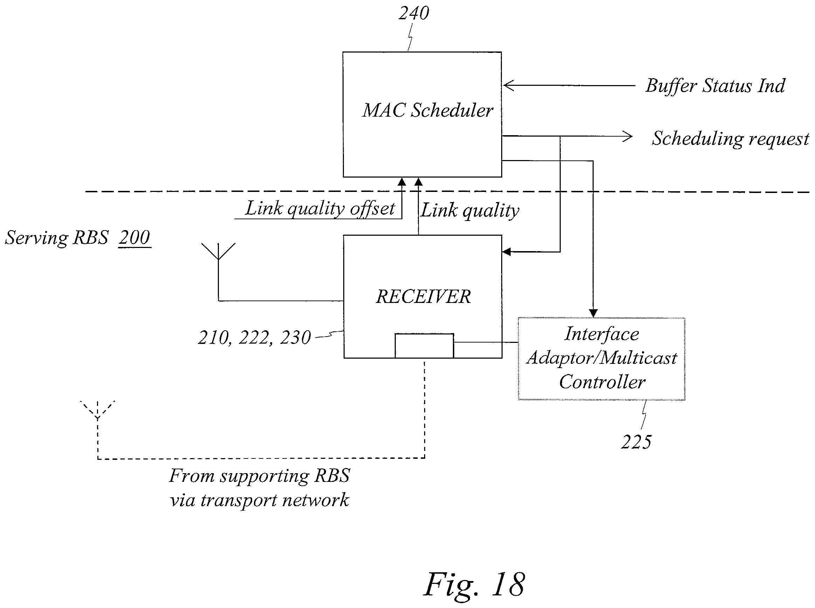

Fig. 18 is a schematic block diagram illustrating an example of a serving radio base station. The radio base station 200 includes a receiver 210, 222, 230 that has functionalities for providing IQ samples based on received radio signals, multicast reception via a network interface, and IQ sample processing and decoding. The base station further comprises an interface adaptor/multicast controller 225, and optionally also a MAC scheduler 240.

In LTE, the MAC scheduler is generally responsible for selecting which UEs are allowed to transmit at what time, and at what frequency. In WCDMA, the MAC scheduler normally determines the maximum rate a UE may use.

The MAC scheduler typically informs the UE about the decision, indicated with a scheduling message to the UE. The same information is sent to the digital receiver.

The decision is normally based on the amount of data the UE has in its buffers (LTE) and the link quality for the UE (LTE, WCDMA). Of course, also other things as the air interface load, processing capabilities and so forth may be included as a basis for the decision.

For WCDMA, the MAC scheduler for the circuit switched traffic is located in the RNC. The bit rate used by the UE is then controlled by even higher layers, by means of channel switching.

The receiver is extended with IQ inputs from the supporting RBS. For both LTE and WCDMA, the MAC scheduler 240 may communicate with the interface adaptor 225 about entering and leaving multicast groups such as VLANs, depending on which multicast groups are of interest to receive IQ data from. For WCDMA, this may also be a static configuration, or controlled by the RNC.

In this example, the Link Quality information may be offset with the likelihood that the supporting RBS antennas can be used for receiving the UE, in the specific part of the spectrum that the supporting RBS forwards data. The likelihood is determined, e.g. from previous reception from that supporting RBS, or based on the downlink (DL) measurements done for mobility - if the DL signal is about the same from the serving and supporting RBS, it can be assumed that the link quality is doubled compared to that measured only from the serving RBS.

It is here assumed that the MAC scheduler has been informed about the possible multicast groups. It is also preferred that the MAC Scheduler can be informed about the DL measurements made by the UE and reported over RRC. If not, the MAC scheduler will have to work based on more predefined expected gains of using supporting RBSs.

By offsetting the link quality this way, a normal fairness algorithm will prioritize UEs with weak UL in the frequency band where complementary assistance data (IQ samples) can be received.

For circuit switched traffic, the multicast group (e.g. VLANs) to enter is likely static, and the carrier covered by the multicast group becomes a preferred WCDMA carrier for weak UEs. The RNC can hand over UEs to this WCDMA carrier.

The steps, functions, procedures and/or blocks described above may be implemented in hardware using any conventional technology, such as discrete circuit or integrated circuit technology, including both general-purpose electronic circuitry and application-specific circuitry.

Alternatively, at least some of the steps, functions, procedures and/or blocks described above may be implemented in software for execution by a suitable computer or processing device such as a microprocessor, Digital Signal Processor (DSP) and/or any suitable programmable logic device such as a Field Programmable Gate Array (FPGA) device and a Programmable Logic Controller (PLC) device.

It should also be understood that it may be possible to re-use the general processing capabilities of any of the radio base stations. It may also be possible to re-use existing software, e.g. by reprogramming of the existing software or by adding new software components.

The software may be realized as a computer program product, which is normally carried on a computer-readable medium. The software may thus be loaded into the operating memory of a computer or equivalent processing system for execution by a processor. The computer/processor does not have to be dedicated to only execute the above-described steps, functions, procedure and/or blocks, but may also execute other software tasks.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

### REFERENCES

[1] WO 2010/124726, Techniques For Quantization Adaptation in Cooperative Signal Communication, Telefonaktiebolaget LM Ericsson
[2] Performance of the LTE Uplink with Intra-Site Joint Detection and Joint Link Adaptation, by A. Müller et al., VTC Spring, 2010.
[3] Distributed Uplink Signal Processing of Cooperating base Stations based on IQ Sample Exchange, by C. Hoymann et al., Proceedings of the IEEE ICC, 2009.
[4] EP 2434835, *Coordinated multi-point transmission CoMP data and signalling on X2-interface using additional VLAN identifier, Deutsche Telecom* AG, (Prior art under Art. 54(3) EPC).

## Claims

1. A method for Coordinated Multipoint, COMP, operation for a serving radio base station serving user equipment, UE, in a cellular communication network, said method comprising the steps of:
- said serving radio base station providing (S1; S31) In-phase and Quadrature-phase, IQ, samples, referred to as own IQ samples, based on received radio signals including a radio signal originating from an uplink transmission of at least one UE;
- said serving radio base station joining (S2; S32-S35) a multicast group for receiving complementary IQ samples from a supporting radio base station via a network interface to a transport network that interconnects the radio base stations, wherein said process of joining a multicast group is based on retrieving a multicast address corresponding to the multicast group and configuring the network interface for reception on that multicast address, wherein said complementary IQ samples correspond to received radio signals at said supporting radio base station; and
- said serving radio base station processing (S3; S36) said own IQ samples and said complementary IQ samples to decode user data of said uplink transmission.

2. The method of claim 1, wherein said multicast group is associated with a cell of the supporting radio base station, and said complementary IQ samples are IQ samples extracted based on received radio signals at said supporting radio base station for said cell.

3. The method of claim 1 or 2, wherein said complementary IQ samples are IQ samples extracted based on received radio signals at said supporting radio base station in a selected subset of the available frequency band and/or from a selected subset of the available antennas.

4. The method of claim 3, wherein said multicast group is associated with IQ samples extracted at said supporting radio base station in said subset of the available frequency band, and said subset of the available frequency band also being reserved for a subset of UEs served by said serving radio base station.

5. The method of claim 4, wherein said step of said serving radio base station joining a multicast group includes the steps of:
- said serving radio base station requesting (S32) to join said multicast group;
- said serving radio base station obtaining (S33) information representative of a multicast address of said multicast group corresponding to said subset of the available frequency band; and
- said serving radio base station configuring (S34) said network interface for reception on said multicast address of said multicast group.

6. The method of any of the preceding claims, wherein said serving radio base station is determining to join said multicast group based on neighbor list information and/or signal strength measurements.

7. The method of any of the preceding claims, wherein said serving radio base station is joining an additional multicast group for receiving further complementary IQ samples from an additional supporting radio base station over said transport network, wherein said further complementary IQ samples correspond to received radio signals at said additional supporting radio base station.

8. The method of any of the preceding claims, wherein said step (S3; S36) of said serving radio base station processing said own IQ samples and said complementary IQ samples comprises the step of time-aligning said IQ samples per UE.

9. The method of any of the preceding claims, wherein said multicast group is a Virtual Local Area Network, VLAN, group or an Internet Protocol, IP, multicast group, and said transport network is an Ethernet network.

10. The method of any of the preceding claims, wherein said supporting radio base station and said serving radio base station are managing cells on different levels in a hierarchical cellular network.

11. A method for Coordinated Multipoint, COMP, operation for a supporting radio base station cooperating with a serving radio base station serving user equipment, UE, in a cellular communication network, said method comprising the steps of:
- said supporting radio base station providing (S11; S21) In-phase and Quadrature-phase, IQ, samples, referred to as complementary IQ samples, based on received radio signals including a radio signal originating from an uplink transmission of at least one UE served by said serving radio base station;
- said supporting radio base station transmitting (S12; S23), via a network interface to a transport network that interconnects the radio base stations, said complementary IQ samples by multicasting to a multicast group that includes said serving radio base station to enable said serving radio base station to decode user data of said uplink transmission based on said complementary IQ samples together with own IQ samples provided by said serving radio base station.

12. The method of claim 11, wherein said multicast group is associated with a cell of the supporting radio base station, and said complementary IQ samples are IQ samples extracted based on received radio signals at said supporting radio base station for said cell.

13. The method of claim 11 or 12, wherein said complementary IQ samples are IQ samples extracted based on received radio signals at said supporting radio base station in a selected subset of the available frequency band and/or from a selected subset of the available antennas.

14. The method of claim 13, wherein said multicast group is associated with IQ samples extracted at said supporting radio base station in said subset of the available frequency band, and said subset of the available frequency band also being reserved for a subset of UEs served by said serving radio base station.

15. The method of claim 14, further comprising the step (S22) of associating said complementary IQ samples extracted at said supporting radio base station in said subset of the available frequency band with said multicast group by assigning a dedicated multicast address to said subset of the available frequency band.

16. The method of any of the claims 13-15, wherein said complementary IQ samples in said subset of the available frequency band are extracted for a selected subset of available carriers.

17. The method of any of the claims 11-16, wherein said multicast group includes a number of radio base stations.

18. The method of any of the claims 11-17, wherein said supporting radio base station is transmitting (S12; S23) said complementary IQ samples to a multicast group that also includes an additional serving radio base station to enable said additional serving radio base station to decode user data of an uplink transmission of at least one UE served by said additional serving radio base station based on said complementary IQ samples together with own IQ samples provided by said additional serving radio base station.

19. The method of any of the claims 11-18, wherein said supporting radio base station is associating each of a number of cells with at least one multicast group and extracting, for each of said at least one multicast group, complementary IQ samples in a respective subset of the available frequency band, and transmitting (S12; S23), via said network interface to said transport network, the complementary IQ samples in the respective subset of the available frequency band to the associated multicast group.

20. The method of any of the claims 11-19, wherein said multicast group is a Virtual Local Area Network, VLAN, group or an Internet Protocol, IP,multicast group, and said transport network is an Ethernet network.

21. The method of any of the claims 11-20, wherein said multicast is implemented as a broadcast within a Virtual Local Area Network, VLAN, IQ samples are packaged into Ethernet packets and transmitted as broadcast on the multicast address, each of said complementary IQ samples being tagged with a multicast group tag.

22. The method of any of the claims 11-21, wherein said supporting radio base station and said serving radio base station are managing cells on different levels in a hierarchical cellular network.

23. A radio base station (200) configured for Coordinated Multipoint, COMP, operation and for serving user equipment, UE, in a cellular communication network, said radio base station (200) comprising:
- an In-phase and Quadrature-phase, IQ, sample provider (210) configured to provide IQ samples, referred to as own IQ samples, based on received radio signals including a radio signal originating from an uplink transmission of at least one UE;
- a multicast receiver (222) configured to join a multicast group for receiving complementary IQ samples from a supporting radio base station (100) via a network interface (224) to a transport network that interconnects the radio base stations, wherein said radio base station (200) is configured for obtaining a multicast address corresponding to the multicast group and for configuring the network interface (224) for reception on the multicast address of the multicast group, wherein said complementary IQ samples correspond to received radio signals at said supporting radio base station; and
- an IQ sample processor (230) configured to process said own IQ samples and said complementary IQ samples to decode user data of said uplink transmission.

24. The radio base station of claim 23, wherein said radio base station (200) comprises a multicast controller (225) configured for requesting to join said multicast group, for obtaining a corresponding multicast address, and for configuring said network interface (224) for reception on said multicast address of said multicast group.

25. The radio base station of claim 23 or 24, wherein said multicast group is associated with a cell of the supporting radio base station, and said complementary IQ samples are IQ samples extracted based on received radio signals at said supporting radio base station for said cell.

26. The radio base station of any of the claims 23-25, wherein said complementary IQ samples are IQ samples extracted based on received radio signals at said supporting radio base station in a selected subset of the available frequency band and/or from a selected subset of the available antennas.

27. The radio base station of claim 26, wherein said multicast group is associated with IQ samples extracted at said supporting radio base station in said subset of the available frequency band, and said subset of the available frequency band also being reserved for a subset of UEs served by said serving radio base station.

28. The radio base station of claim 27, wherein said radio base station (200) comprises a multicast controller (225) configured for requesting to join said multicast group, for obtaining information representative of a multicast address of said multicast group corresponding to said subset of the available frequency band, and for configuring said network interface (224) for reception on said multicast address of said multicast group.

29. The radio base station of any of the claims 23-28, wherein said radio base station is configured for determining to join said multicast group based on neighbor list information and/or signal strength measurements.

30. The radio base station of any of the claims 23-29, wherein said IQ sample processor (230) comprises a time-aligner (234)for time-aligning said own IQ samples and said complementary IQ samples per UE.

31. The radio base station of any of the claims 23-30, wherein said multicast group is a Virtual Local Area Network, VLAN, group or an Internet Protocol, IP, multicast group, and said transport network is an Ethernet network.

32. The radio base station of any of the claims 23-31, wherein said radio base station (200) is a micro cell base station configured for cooperation with a supporting radio base station (100) in the form of a macro cell base station in a hierarchical cellular network.

33. A radio base station (100), referred to as a supporting radio base station, configured for Coordinated Multipoint, COMP, operation in cooperation with a serving radio base station (200) serving user equipment, UE, in a cellular communication network, said radio base station (100) comprising:
- an In-phase and Quadrature-phase, IQ, sample provider (110) configured to provide IQ samples, referred to as complementary IQ samples, based on received radio signals including a radio signal originating from an uplink transmission of at least one UE served by said serving radio base station;
- a multicast transmitter (122) configured to transmit, via a network interface (124) to a transport network that interconnects the radio base stations, said complementary IQ samples by multicasting to a multicast group that includes said serving radio base station (200) to enable said serving radio base station to decode user data of said uplink transmission based on said complementary IQ samples together with own IQ samples provided by said serving radio base station.

34. The radio base station of claim 33, wherein said multicast group is associated with a cell of the supporting radio base station, and said IQ sample provider (110) is configured to extract said complementary IQ samples based on received radio signals at said supporting radio base station for said cell.

35. The radio base station of claim 33 or 34, wherein said IQ sample provider (110) comprises an extractor (114) configured to extract said complementary IQ samples in a selected subset of the available frequency band (A) and/or from a selected subset of the available antennas (B).

36. The radio base station of claim 35, wherein said extractor (114) comprises a sub-channel filter configured to extract IQ samples in said subset of the available frequency band, and said multicast group is associated with the IQ samples extracted in said subset of the available frequency band, and said subset of the available frequency band also being reserved for a subset of UEs served by said serving radio base station.

37. The radio base station of claim 36, wherein said radio base station (100) is configured to associate said complementary IQ samples extracted in said subset of the available frequency band with said multicast group by assigning a dedicated multicast address to said subset of the available frequency band.

38. The radio base station of any of the claims 35-37, wherein said extractor (114) is configured to extract said complementary IQ samples for a selected subset of available carriers.

39. The radio base station of any of the claims 33-38, wherein said radio base station (100) is configured to associate each of a number of cells with at least one multicast group and said IQ sample provider (110) is configured to extract, for each of said at least one multicast group, complementary IQ samples in a respective subset of the available frequency band, and said multicast transmitter (122) is configured to transmit, via said network interface (124) to said transport network, the complementary IQ samples in the respective subset of the available frequency band to the associated multicast group.

40. The radio base station of any of the claims 33-39, wherein said multicast group is a Virtual Local Area Network, VLAN, group or an Internet Protocol, IP, multicast group, and said transport network is an Ethernet network.

## Patentansprüche

1. Verfahren für koordinierten Mehrpunkt (COMP)-Betrieb für eine bedienende Funkbasisstation, die ein Benutzergerät (UE) in einem zellularen Kommunikationsnetz bedient, wobei das Verfahren die folgenden Schritte umfasst:
- die bedienende Funkbasisstation stellt (S1; S31) In-Phase-und-Quadraturphasen (IQ)-Proben, bezeichnet als eigene IQ-Proben, basierend auf empfangenen Funksignalen, die ein Funksignal beinhalten, das von einer Uplink-Übertragung von zumindest einem UE stammt, bereit;
- die bedienende Funkbasisstation tritt einer Multicast-Gruppe zum Empfangen von komplementären IQ-Proben von einer unterstützenden Funkbasisstation über eine Netzschnittstelle zu einem Transportnetz, das die Funkbasisstationen miteinander verbindet, bei (S2; S32-S35), wobei der Prozess des Beitretens zu einer Multicast-Gruppe auf Empfangen einer Multicast-Adresse entsprechend der Multicast-Gruppe und Konfigurieren der Netzschnittstelle zum Empfang auf dieser Multicast-Adresse basiert, wobei die komplementären IQ-Proben empfangenen Funksignalen auf der unterstützenden Funkbasisstation entsprechen; und
- die bedienende Funkbasisstation verarbeitet (S3; S36) die eigenen IQ-Proben und die komplementären IQ-Proben, um Benutzerdaten der Uplink-Übertragung zu decodieren.

2. Verfahren nach Anspruch 1, wobei die Multicast-Gruppe mit einer Zelle der unterstützenden Funkbasisstation assoziiert ist und die komplementären IQ-Proben IQ-Proben sind, die basierend auf empfangenen Funksignalen an der unterstützenden Funkbasisstation für die Zelle extrahiert werden.

3. Verfahren nach Anspruch 1 oder 2, wobei die komplementären IQ-Proben IQ-Proben sind, die basierend auf empfangenen Funksignalen auf der unterstützenden Funkbasisstation in einer ausgewählten Untermenge des verfügbaren Frequenzbands und/oder aus einer ausgewählten Untermenge der verfügbaren Antennen extrahiert werden.

4. Verfahren nach Anspruch 3, wobei die Multicast-Gruppe mit IQ-Proben assoziiert ist, die auf der unterstützenden Funkbasisstation in der Untermenge des verfügbaren Frequenzbands extrahiert werden und die Untermenge des verfügbaren Frequenzbands auch für eine Untermenge von UE, die durch die bedienende Funkbasisstation bedient werden, reserviert ist.

5. Verfahren nach Anspruch 4, wobei der Schritt der bedienenden Funkbasisstation, einer Multicast-Gruppe beizutreten, die folgenden Schritte beinhaltet:
- die bedienende Funkbasisstation fordert auf (S32), der Multicast-Gruppe beizutreten;
- die bedienende Funkbasisstation erlangt (S33) Informationen, die für eine Multicast-Adresse der Multicast-Gruppe, die der Untermenge des verfügbaren Frequenzbands entspricht, repräsentativ sind; und
- die bedienende Funkbasisstation konfiguriert (S34) die Netzschnittstelle zum Empfang auf der Multicast-Adresse der Multicast-Gruppe.

6. Verfahren nach einem der vorhergehenden Ansprüche, wobei die bedienende Funkbasisstation bestimmt, der Multicast-Gruppe basierend auf Nachbarlisteninformationen und/oder Signalstärkemessungen beizutreten.

7. Verfahren nach einem der vorhergehenden Ansprüche, wobei die bedienende Funkbasisstation einer zusätzlichen Multicast-Gruppe zum Empfangen weiterer komplementärer IQ-Proben von einer zusätzlichen unterstützenden Funkbasisstation über das Transportnetz beitritt, wobei die weiteren komplementären IQ-Proben empfangenen Funksignalen an der zusätzlichen unterstützenden Funkbasisstation entsprechen.

8. Verfahren nach einem der vorhergehenden Ansprüche, wobei der Schritt (S3; S36) der bedienenden Funkbasisstation, die eigenen IQ-Proben und die komplementären IQ-Proben zu verarbeiten, den Schritt des zeitlichen Ausrichtens der IQ-Proben pro UE umfasst.

9. Verfahren nach einem der vorhergehenden Ansprüche, wobei die Multicast-Gruppe eine virtuelle lokale Netz (VLAN)-Gruppe oder eine Internetprotokoll (IP)-Multicast-Gruppe ist und das Transportnetz ein Ethernet-Netz ist.

10. Verfahren nach einem der vorhergehenden Ansprüche, wobei die unterstützende Funkbasisstation und die bedienende Funkbasisstation Zellen auf unterschiedlichen Ebenen in einem hierarchischen zellularen Netz verwalten.

11. Verfahren für koordinierten Mehrpunkt (COMP)-Betrieb für eine unterstützende Funkbasisstation, die mit einer bedienenden Funkbasisstation zusammenarbeitet, die ein Benutzergerät (UE) in einem zellularen Kommunikationsnetz bedient, wobei das Verfahren die folgenden Schritte umfasst:
- die unterstützende Funkbasisstation stellt (S11; S21) In-Phase-und-Quadraturphasen (IQ)-Proben, bezeichnet als komplementäre IQ-Proben, basierend auf empfangenen Funksignalen, die ein Funksignal beinhalten, das von einer Uplink-Übertragung von zumindest einem UE stammt, das durch die bedienende Funkbasisstation bedient wird, bereit;
- die unterstützende Funkbasisstation überträgt (S12; S23), über eine Netzschnittstelle zu einem Transportnetz, das die Funkbasisstationen miteinander verbindet, die komplementären IQ-Proben durch Multicasting an eine Multicast-Gruppe, die die bedienende Funkbasisstation beinhaltet, um es der bedienenden Funkbasisstation zu ermöglichen, Benutzerdaten der Uplink-Übertragung basierend auf den komplementären IQ-Proben zusammen mit eigenen IQ-Proben, die durch die bedienende Funkbasisstation bereitgestellt werden, zu decodieren.

12. Verfahren nach Anspruch 11, wobei die Multicast-Gruppe mit einer Zelle der unterstützenden Funkbasisstation assoziiert ist und die komplementären IQ-Proben IQ-Proben sind, die basierend auf empfangenen Funksignalen an der unterstützenden Funkbasisstation für die Zelle extrahiert werden.

13. Verfahren nach Anspruch 11 oder 12, wobei die komplementären IQ-Proben IQ-Proben sind, die basierend auf empfangenen Funksignalen auf der unterstützenden Funkbasisstation in einer ausgewählten Untermenge des verfügbaren Frequenzbands und/oder aus einer ausgewählten Untermenge der verfügbaren Antennen extrahiert werden.

14. Verfahren nach Anspruch 13, wobei die Multicast-Gruppe mit IQ-Proben assoziiert ist, die auf der unterstützenden Funkbasisstation in der Untermenge des verfügbaren Frequenzbands extrahiert werden und die Untermenge des verfügbaren Frequenzbands auch für eine Untermenge von UE, die durch die bedienende Funkbasisstation bedient werden, reserviert ist.

15. Verfahren nach Anspruch 14, ferner umfassend den Schritt (S22) des Assoziierens der komplementären IQ-Proben, die auf der unterstützenden Funkbasisstation in der Untermenge des verfügbaren Frequenzbands mit der Multicast-Gruppe durch Zuweisen einer dedizierten Multicast-Adresse zu der Untermenge des verfügbaren Frequenzbands extrahiert werden.

16. Verfahren nach einem der Ansprüche 13-15, wobei die komplementären IQ-Proben in der Untermenge des verfügbaren Frequenzbands für eine ausgewählte Untermenge von verfügbaren Trägern extrahiert werden.

17. Verfahren nach einem der Ansprüche 11-16, wobei die Multicast-Gruppe eine Anzahl von Funkbasisstationen beinhaltet.

18. Verfahren nach einem der Ansprüche 11-17, wobei die unterstützende Funkbasisstation die komplementären IQ-Proben an eine Multicast-Gruppe überträgt (S12; S23), die auch eine zusätzliche bedienende Funkbasisstation beinhaltet, um es der zusätzlichen bedienenden Funkbasisstation zu ermöglichen, Benutzerdaten einer Uplink-Übertragung von zumindest einem UE, das durch die zusätzliche bedienende Basisstation bedient wird, basierend auf den komplementären IQ-Proben zusammen mit eigenen IQ-Proben, die durch die zusätzliche bedienende Funkbasisstation bereitgestellt werden, zu decodieren.

19. Verfahren nach einem der Ansprüche 11-18, wobei die unterstützende Funkbasisstation jede von einer Anzahl von Zellen mit zumindest einer Multicast-Gruppe assoziiert und für jede der zumindest einen Multicast-Gruppe komplementäre IQ-Proben in einer entsprechenden Untermenge des verfügbaren Frequenzbands extrahiert und, über die Netzschnittstelle zu dem Transportnetz, die komplementären IQ-Proben in der entsprechenden Untermenge des verfügbaren Frequenzbands an die assoziierte Multicast-Gruppe überträgt (S12; S23).

20. Verfahren nach einem der Ansprüche 11-19, wobei die Multicast-Gruppe eine virtuelle lokale Netz (VLAN)-Gruppe oder eine Internetprotokoll (IP)-Multicast-Gruppe ist und das Transportnetz ein Ethernet-Netz ist.

21. Verfahren nach einem der Ansprüche 11-20, wobei der Multicast als ein Broadcast innerhalb eines virtuellen lokalen Netzs, VLAN, umgesetzt wird, IQ-Proben in Ethernet-Paketen verpackt werden und als Broadcast auf der Multicast-Adresse übertragen werden, wobei jede der komplementären IQ-Proben mit einem Multicast-Gruppen-Tag markiert ist.

22. Verfahren nach einem der Ansprüche 11-21, wobei die unterstützende Funkbasisstation und die bedienende Funkbasisstation Zellen auf unterschiedlichen Ebenen in einem hierarchischen zellularen Netz verwalten.

23. Funkbasisstation (200), konfiguriert für koordinierten Mehrpunkt (COMP)-Betrieb und zum Bedienen eines Benutzergeräts (UE) in einem zellularen Kommunikationsnetz, wobei die Funkbasisstation (200) Folgendes umfasst:
- einen In-Phase-und-Quadraturphasen (IQ)-Probenbereitsteller (210) der dazu konfiguriert ist, IQ-Proben, bezeichnet als eigene IQ-Proben, basierend auf empfangenen Funksignalen, die ein Funksignal beinhalten, das von einer Uplink-Übertragung von zumindest einem UE stammt, bereitzustellen;
- einen Multicastempfänger (222), der dazu konfiguriert ist, einer Multicast-Gruppe zum Empfangen von komplementären IQ-Proben von einer unterstützenden Funkbasisstation (100) über eine Netzschnittstelle (224) zu einem Transportnetz, das die Funkbasisstationen miteinander verbindet, beizutreten, wobei die Funkbasisstation (200) zum Erlangen einer Multicast-Adresse entsprechend der Multicast-Gruppe und zum Konfigurieren der Netzschnittstelle (224) zum Empfang auf der Multicast-Adresse der Multicast-Gruppe konfiguriert ist, wobei die komplementären IQ-Proben empfangenen Funksignalen auf der unterstützenden Funkbasisstation entsprechen; und
- einen IQ-Probenprozessor (230), der dazu konfiguriert ist, die eigenen IQ-Proben und die komplementären IQ-Proben zu verarbeiten, um Benutzerdaten der Uplink-Übertragung zu decodieren.

24. Funkbasisstation nach Anspruch 23, wobei die Funkbasisstation (200) eine Multicast-Steuerung (225) umfasst, die zum Auffordern, der Multicast-Gruppe beizutreten, zum Erlangen einer entsprechenden Multicast-Adresse und zum Konfigurieren der Netzschnittstelle (224) zum Empfang auf der Multicast-Adresse der Multicast-Gruppe konfiguriert ist.

25. Funkbasisstation nach Anspruch 23 oder 24, wobei die Multicast-Gruppe mit einer Zelle der unterstützenden Funkbasisstation assoziiert ist und die komplementären IQ-Proben IQ-Proben sind, die basierend auf empfangenen Funksignalen an der unterstützenden Funkbasisstation für die Zelle extrahiert werden.

26. Funkbasisstation nach einem der Ansprüche 23-25, wobei die komplementären IQ-Proben IQ-Proben sind, die basierend auf empfangenen Funksignalen auf der unterstützenden Funkbasisstation in einer ausgewählten Untermenge des verfügbaren Frequenzbands und/oder aus einer ausgewählten Untermenge der verfügbaren Antennen extrahiert werden.

27. Funkbasisstation nach Anspruch 26, wobei die Multicast-Gruppe mit IQ-Proben assoziiert ist, die auf der unterstützenden Funkbasisstation in der Untermenge des verfügbaren Frequenzbands extrahiert werden und die Untermenge des verfügbaren Frequenzbands auch für eine Untermenge von UE, die durch die bedienende Funkbasisstation bedient werden, reserviert ist.

28. Funkbasisstation nach Anspruch 27, wobei die Funkbasisstation (200) eine Multicast-Steuerung (225) umfasst, die zum Auffordern, der Multicast-Gruppe beizutreten, zum Erlangen von Informationen, die für eine Multicast-Adresse der Multicast-Gruppe, die der Untermenge des verfügbaren Frequenzbands entspricht, repräsentativ sind, und zum Konfigurieren der Netzschnittstelle (224) zum Empfang auf der Multicast-Adresse der Multicast-Gruppe konfiguriert ist.

29. Funkbasisstation nach einem der Ansprüche 23-28, wobei die Funkbasisstation zum Bestimmen, der Multicast-Gruppe basierend auf Nachbarlisteninformationen und/oder Signalstärkemessungen beizutreten, konfiguriert ist.

30. Funkbasisstation nach einem der Ansprüche 23-29, wobei der IQ-Probenprozessor (230) einen zeitlichen Ausrichter (234) zum zeitlichen Ausrichten der eigenen IQ-Proben und der komplementären IQ-Proben pro UE umfasst.

31. Funkbasisstation nach einem der Ansprüche 23-30, wobei die Multicast-Gruppe eine virtuelle lokale Netz (VLAN)-Gruppe oder eine Internetprotokoll (IP)-Multicast-Gruppe ist und das Transportnetz ein Ethernet-Netz ist.

32. Funkbasisstation nach einem der Ansprüche 23-31, wobei die Funkbasisstation (200) eine Mikrozellenbasisstation ist, die zum Zusammenarbeiten mit einer unterstützenden Funkbasisstation (100) in der Form einer Makrozellenbasisstation in einem hierarchischen zellularen Netz konfiguriert ist.

33. Funkbasisstation (100), bezeichnet als unterstützende Funkbasisstation, konfiguriert für koordinierten Mehrpunkt (COMP)-Betrieb in Zusammenarbeit mit einer bedienenden Funkbasisstation (200), die ein Benutzergerät (UE) in einem zellularen Kommunikationsnetz bedient, wobei die Funkbasisstation (100) Folgendes umfasst:
- einen In-Phase-und-Quadraturphasen (IQ)-Probenbereitsteller (110) der dazu konfiguriert ist, IQ-Proben, bezeichnet als komplementäre IQ-Proben, basierend auf empfangenen Funksignalen, die ein Funksignal beinhalten, das von einer Uplink-Übertragung von zumindest einem UE, das durch die bedienende Funkbasisstation bedient wird, stammt, bereitzustellen;
- einen Multicast-Sender (122), der dazu konfiguriert ist, über eine Netzschnittstelle (124) zu einem Transportnetz, das die Funkbasisstationen miteinander verbindet, die komplementären IQ-Proben durch Multicasting an eine Multicast-Gruppe, die die bedienende Funkbasisstation (200) beinhaltet, zu übertragen, um es der bedienenden Funkbasisstation zu ermöglichen, Benutzerdaten der Uplink-Übertragung basierend auf den komplementären IQ-Proben zusammen mit eigenen IQ-Proben, die durch die bedienende Funkbasisstation bereitgestellt werden, zu decodieren.

34. Funkbasisstation nach Anspruch 33, wobei die Multicast-Gruppe mit einer Zelle der unterstützenden Funkbasisstation assoziiert ist und der IQ-Probenbereitsteller (110) dazu konfiguriert ist, komplementäre IQ-Proben basierend auf empfangenen Funksignalen an der unterstützenden Funkbasisstation für die Zelle zu extrahieren.

35. Funkbasisstation nach Anspruch 33 oder 34, wobei der IQ-Probenbereitsteller (110) einen Extraktor (114) umfasst, der dazu konfiguriert ist, die komplementären IQ-Proben in einer ausgewählten Untermenge des verfügbaren Frequenzbands (A) und/oder aus einer ausgewählten Untermenge der verfügbaren Antennen (B) zu extrahieren.

36. Funkbasisstation nach Anspruch 35, wobei der Extraktor (114) einen Unterkanalfilter umfasst, der dazu konfiguriert ist, IQ-Proben in der Untermenge des verfügbaren Frequenzbands zu extrahieren, und die Multicast-Gruppe mit den IQ-Proben, die in der Untermenge des verfügbaren Frequenzbands extrahiert werden, assoziiert ist, und die Untermenge des verfügbaren Frequenzbands auch für eine Untermenge von UE, die durch die bedienende Funkbasisstation bedient werden, reserviert ist.

37. Funkbasisstation nach Anspruch 36, wobei die Funkbasisstation (100) dazu konfiguriert ist, die komplementären IQ-Proben, die in der Untermenge des verfügbaren Frequenzbands extrahiert werden, durch Zuweisen einer dedizierten Multicast-Adresse zu der Untermenge des verfügbaren Frequenzbands mit der Multicast-Gruppe zu assoziieren.

38. Funkbasisstation nach einem der Ansprüche 35-37, wobei der Extraktor (114) dazu konfiguriert ist, die komplementären IQ-Proben für eine ausgewählte Untermenge von verfügbaren Trägern zu extrahieren.

39. Funkbasisstation nach einem der Ansprüche 33-38, wobei die Funkbasisstation (100) dazu konfiguriert ist, jede von einer Anzahl von Zellen mit zumindest einer Multicast-Gruppe zu assoziieren, und der IQ-Probenbereitsteller (110) dazu konfiguriert ist, für jede der zumindest einen Multicast-Gruppe komplementäre IQ-Proben in einer entsprechenden Untermenge des verfügbaren Frequenzbands zu extrahieren, und der Multicast-Sender (122) dazu konfiguriert ist, über die Netzschnittstelle (124) zu dem Transportnetz die komplementären IQ-Proben in der entsprechenden Untermenge des verfügbaren Frequenzbands an die assoziierte Multicast-Gruppe zu übertragen.

40. Funkbasisstation nach einem der Ansprüche 33-39, wobei die Multicast-Gruppe eine virtuelle lokale Netz (VLAN)-Gruppe oder eine Internetprotokoll (IP)-Multicast-Gruppe ist und das Transportnetz ein Ethernet-Netz ist.

## Revendications

1. Procédé pour une opération multipoint coordonnée, COMP, pour une station de base radio de desserte desservant un équipement d'utilisateur, UE, dans un réseau de communication cellulaire, ledit procédé comprenant les étapes consistant à :
- pour ladite station de base radio de desserte fournir (S1 ; S31) des échantillons en phase entrante et en phase de quadrature, IQ, appelés propres échantillons IQ, sur la base de signaux radio reçus comportant un signal radio ayant pour origine une transmission en liaison montante d'au moins un UE ;
- pour ladite station de base radio de desserte rejoindre (S2 ; S32-S35) un groupe de multidiffusion pour recevoir des échantillons IQ complémentaires à partir d'une station de base radio de support via une interface réseau vers un réseau de transport qui interconnecte les stations de base radio, dans lequel ledit procédé consistant à rejoindre un groupe de multidiffusion est basé sur la récupération d'une adresse de multidiffusion correspondant au groupe de multidiffusion et à configurer l'interface réseau pour la réception de cette adresse de multidiffusion, dans lequel lesdits échantillons IQ complémentaires correspondent à des signaux radio reçus au niveau de ladite station de base radio de support ; et
- pour ladite station de base radio de desserte traiter (S3 ; S36) lesdits propres échantillons IQ et lesdits échantillons IQ complémentaires pour décoder des données d'utilisateur de ladite transmission en liaison montante.

2. Procédé selon la revendication 1, dans lequel ledit groupe de multidiffusion est associé à une cellule de la station de base radio de support, et lesdits échantillons IQ complémentaires sont des échantillons IQ extraits sur la base de signaux radio reçus au niveau de ladite station de base radio de support pour ladite cellule.

3. Procédé selon la revendication 1 ou 2, dans lequel lesdits échantillons IQ complémentaires sont des échantillons IQ extraits sur la base de signaux radio reçus au niveau de ladite station de base radio de support dans un sous-ensemble sélectionné de la bande de fréquence disponible et/ou à partir d'un sous-ensemble sélectionné des antennes disponibles.

4. Procédé selon la revendication 3, dans lequel ledit groupe de multidiffusion est associé à des échantillons IQ extraits au niveau de ladite station de base radio de support dans ledit sous-ensemble de la bande de fréquence disponible, et ledit sous-ensemble de la bande de fréquence disponible étant également réservé pour un sous-ensemble d'UE desservis par ladite station de base radio de desserte.

5. Procédé selon la revendication 4, dans lequel ladite étape de ladite station de base radio de desserte rejoignant un groupe de multidiffusion comporte les étapes consistant à :
- pour ladite station de base radio de desserte demander (S32) à rejoindre ledit groupe de multidiffusion ;
- pour ladite station de base radio de desserte obtenir (S33) des informations représentatives d'une adresse de multidiffusion dudit groupe de multidiffusion correspondant audit sous-ensemble de la bande de fréquence disponible ; et
- pour ladite station de base radio de desserte configurer (S34) ladite interface réseau pour une réception sur ladite adresse de multidiffusion dudit groupe de multidiffusion.

6. Procédé selon l'une quelconque des revendications précédentes, dans lequel ladite station de base radio de desserte détermine à rejoindre ledit groupe de multidiffusion sur la base d'informations de listes voisines et/ou de mesures de puissance de signal.

7. Procédé selon l'une quelconque des revendications précédentes, dans lequel ladite station de base radio de desserte rejoint un groupe de multidiffusion additionnel pour recevoir d'autres échantillons IQ complémentaires à partir d'une station de base radio de support additionnelle sur ledit réseau de transport, dans lequel lesdits autres échantillons IQ complémentaires correspondent à des signaux radio reçus au niveau de ladite station de base radio de support additionnelle.

8. Procédé selon l'une quelconque des revendications précédentes, dans lequel ladite étape (S3 ; S36) de ladite station de base radio de desserte traitant lesdits propres échantillons IQ et lesdits échantillons IQ complémentaires comprend l'étape d'alignement dans le temps desdits échantillons IQ par UE.

9. Procédé selon l'une quelconque des revendications précédentes, dans lequel ledit groupe de multidiffusion est un groupe de réseau local virtuel, VLAN, ou un groupe de multidiffusion à protocole Internet, IP, et ledit réseau de transport est un réseau Ethernet.

10. Procédé selon l'une quelconque des revendications précédentes, dans lequel ladite station de base radio de support et ladite station de base radio de desserte sont des cellules de gestion sur des niveaux différents dans un réseau cellulaire hiérarchique.

11. Procédé pour une opération multipoint coordonnée, COMP, pour une station de base radio de support coopérant avec une station de base radio de desserte desservant un équipement d'utilisateur, UE, dans un réseau de communication cellulaire, ledit procédé comprenant les étapes consistant à :
- pour ladite station de base radio de support fournir (S11 ; S21) des échantillons en phase entrante et en phase de quadrature, IQ, appelés échantillons IQ complémentaires, sur la base de signaux radio reçus comportant un signal radio ayant pour origine une transmission en liaison montante d'au moins un UE desservi par ladite station de base radio de desserte ;
- pour ladite station de base radio de support transmettre (S12 ; S23), via une interface réseau à un réseau de transport qui interconnecte les stations de base radio, lesdits échantillons IQ complémentaires par multidiffusion à un groupe de multidiffusion qui comporte ladite station de base radio de desserte pour permettre à ladite station de base radio de desserte de décoder des données d'utilisateur de ladite transmission en liaison montante sur la base desdits échantillons IQ complémentaires conjointement avec ses propres échantillons IQ fournis par ladite station de base radio de desserte.

12. Procédé selon la revendication 11, dans lequel ledit groupe de multidiffusion est associé à une cellule de la station de base radio de support, et lesdits échantillons IQ complémentaires sont des échantillons IQ extraits sur la base de signaux radio reçus au niveau de ladite station de base radio de support pour ladite cellule.

13. Procédé selon la revendication 11 ou 12, dans lequel lesdits échantillons IQ complémentaires sont des échantillons IQ extraits sur la base de signaux radio reçus au niveau de ladite station de base radio de support dans un sous-ensemble sélectionné de ladite bande de fréquence disponible et/ou à partir d'un sous-ensemble sélectionné des antennes disponibles.

14. Procédé selon la revendication 13, dans lequel ledit groupe de multidiffusion est associé à des échantillons IQ extraits au niveau de ladite station de base radio de support dans ledit sous-ensemble de la bande de fréquence disponible, et ledit sous-ensemble de la bande de fréquence disponible étant également réservé pour un sous-ensemble d'UE desservis par ladite station de base radio de desserte.

15. Procédé selon la revendication 14, comprenant en outre l'étape (S22) d'association desdits échantillons IQ complémentaires extraits au niveau de ladite station de base radio de support dans ledit sous-ensemble de la bande de fréquence disponible avec ledit groupe de multidiffusion par attribution d'une adresse de multidiffusion dédiée audit sous-ensemble de la bande de fréquence disponible.

16. Procédé selon l'une quelconque des revendications 13-15, dans lequel lesdits échantillons IQ complémentaires dans ledit sous-ensemble de la bande de fréquence disponible sont extraits pour un sous-ensemble sélectionné de porteuses disponibles.

17. Procédé selon l'une quelconque des revendications 11-16, dans lequel ledit groupe de multidiffusion comporte un nombre de stations de base radio.

18. Procédé selon l'une quelconque des revendications 11-17, dans lequel ladite station de base radio de support transmet (S12 ; S23) lesdits échantillons IQ complémentaires à un groupe de multidiffusion qui comporte également une station de base radio de desserte additionnelle pour permettre à ladite station de base radio de desserte additionnelle de décoder des données d'utilisateur d'une transmission en liaison montante d'au moins un UE desservi par ladite station de base radio de desserte additionnelle sur la base desdits échantillons IQ complémentaires conjointement avec ses propres échantillons IQ fournis par ladite station de base radio de desserte additionnelle.

19. Procédé selon l'une quelconque des revendications 11-18, dans lequel ladite station de base radio de support associe chacun d'un nombre de cellules à au moins un groupe de multidiffusion et extrait, pour chacun dudit au moins un groupe de multidiffusion, des échantillons IQ complémentaires dans un sous-ensemble respectif de la bande de fréquence disponible, et transmet (S12 ; S23), via ladite interface réseau audit réseau de transport, les échantillons IQ complémentaires dans le sous-ensemble respectif de la bande de fréquence au groupe de multidiffusion associé.

20. Procédé selon l'une quelconque des revendications 11-19, dans lequel ledit groupe de multidiffusion est un groupe de réseau local virtuel, VLAN, ou un groupe de multidiffusion à protocole Internet, IP, et ledit réseau de transport est un réseau Ethernet.

21. Procédé selon l'une quelconque des revendications 11-20, dans lequel ladite multidiffusion est mise en oeuvre en tant que diffusion au sein d'un réseau local virtuel, VLAN, les échantillons IQ sont conditionnés dans des paquets Ethernet et transmis en tant que diffusion sur l'adresse de multidiffusion, chacun desdits échantillons IQ complémentaires étant balisé avec une balise de groupe de multidiffusion.

22. Procédé selon l'une quelconque des revendications 11-21, dans lequel ladite station de base radio de support et ladite station de base radio de desserte sont des cellules de gestion sur des niveaux différents dans un réseau cellulaire hiérarchique.

23. Station de base radio (200) configurée pour une opération multipoint coordonnée, COMP, et pour desservir un équipement d'utilisateur, UE, dans un réseau de communication cellulaire, ladite station de base radio (200) comprenant :
- un fournisseur d'échantillons en phase entrante et en phase de quadrature, IQ, (210) configuré pour fournir des échantillons IQ, appelés propres échantillons IQ, sur la base de signaux radio reçus comportant un signal radio ayant pour origine une transmission en liaison montante d'au moins un UE ;
- un récepteur de multidiffusion (222) configuré pour rejoindre un groupe de multidiffusion pour recevoir des échantillons IQ complémentaires à partir d'une station de base radio de support (100) via une interface réseau (224) vers un réseau de transport qui interconnecte les stations de base radio, dans laquelle ladite station de base radio (200) est configurée pour obtenir une adresse de multidiffusion correspondant au groupe de multidiffusion et pour configurer l'interface réseau (224) pour une réception sur l'adresse de multidiffusion du groupe de multidiffusion, dans laquelle lesdits échantillons IQ complémentaires correspondent aux signaux radio reçus au niveau de ladite station de base radio de support ; et
- un processeur d'échantillons IQ (230) configuré pour traiter lesdits propres échantillons IQ et lesdits échantillons IQ complémentaires pour décoder des données d'utilisateur de ladite transmission en liaison montante.

24. Station de base radio selon la revendication 23, dans laquelle ladite station de base radio (200) comprend un contrôleur de multidiffusion (225) configuré pour demander à rejoindre ledit groupe de multidiffusion, pour obtenir une adresse de multidiffusion correspondante, et pour configurer ladite interface réseau (224) pour une réception sur ladite adresse de multidiffusion dudit groupe de multidiffusion.

25. Station de base radio selon la revendication 23 ou 24, dans laquelle ledit groupe de multidiffusion est associé à une cellule de la station de base radio de support, et lesdits échantillons IQ complémentaires sont des échantillons IQ extraits sur la base de signaux radio reçus au niveau de ladite station de base radio de support pour ladite cellule.

26. Station de base radio selon l'une quelconque des revendications 23-25, dans laquelle lesdits échantillons IQ complémentaires sont des échantillons IQ extraits sur la base de signaux radio reçus au niveau de ladite station de base radio de support dans un sous-ensemble sélectionné de la bande de fréquence disponible et/ou à partir d'un sous-ensemble sélectionné des antennes disponibles.

27. Station de base radio selon la revendication 26, dans laquelle ledit groupe de multidiffusion est associé à des échantillons IQ extraits au niveau de ladite station de base radio de support dans ledit sous-ensemble de la bande de fréquence disponible, et ledit sous-ensemble de la bande de fréquence disponible étant également réservé pour un sous-ensemble d'UE desservis par ladite station de base radio de desserte.

28. Station de base radio selon la revendication 27, dans laquelle ladite station de base radio (200) comprend un contrôleur de multidiffusion (225) configuré pour demander à rejoindre ledit groupe de multidiffusion, pour obtenir des informations représentatives d'une adresse de multidiffusion dudit groupe de multidiffusion correspondant audit sous-ensemble de la bande de fréquence disponible, et pour configurer ladite interface réseau (224) pour une réception sur ladite adresse de multidiffusion dudit groupe de multidiffusion.

29. Station de base radio selon l'une quelconque des revendications 23-28, dans laquelle ladite station de base radio est configurée pour déterminer à rejoindre ledit groupe de multidiffusion sur la base d'informations de listes voisines et/ou de mesures de puissance de signal.

30. Station de base radio selon l'une quelconque des revendications 23-29, dans laquelle ledit processeur d'échantillons IQ (230) comprend un dispositif d'alignement dans le temps (234) pour aligner dans le temps lesdits propres échantillons IQ et lesdits échantillons IQ complémentaires par UE.

31. Station de base radio selon l'une quelconque des revendications 23-30, dans laquelle ledit groupe de multidiffusion est un groupe de réseau local virtuel, VLAN, ou un groupe de multidiffusion à protocole Internet, IP, et ledit réseau de transport est un réseau Ethernet.

32. Station de base radio selon l'une quelconque des revendications 23-31, dans laquelle ladite station de base radio (200) est une station de base de microcellules configurée pour une coopération avec une station de base radio de support (100) en forme de station de base de macrocellules dans un réseau cellulaire hiérarchique.

33. Station de base radio (100), appelée station de base radio de support, configurée pour une opération multipoint coordonnée, COMP, en coopération avec une station de base radio de desserte (200) desservant un équipement d'utilisateur, UE, dans un réseau de communication cellulaire, ladite station de base radio (100) comprenant :
- un fournisseur d'échantillons en phase entrante et en phase de quadrature, IQ, (110) configuré pour fournir des échantillons IQ, appelés échantillons IQ complémentaires, sur la base de signaux radio reçus comportant un signal radio ayant pour origine une transmission en liaison montante d'au moins un UE desservi par ladite station de base radio de desserte ;
- un transmetteur de multidiffusion (122) configuré pour transmettre, via une interface réseau (124) à un réseau de transport qui interconnecte les stations de base radio, lesdits échantillons IQ complémentaires par multidiffusion à un groupe de multidiffusion qui comporte ladite station de base radio de desserte (200) pour permettre à ladite station de base radio de desserte de décoder des données d'utilisateur de ladite transmission en liaison montante sur la base desdits échantillons IQ complémentaires conjointement avec ses propres échantillons IQ fournis par ladite station de base radio de desserte.

34. Station de base radio selon la revendication 33, dans laquelle ledit groupe de multidiffusion est associé à une cellule de la station de base radio de support, et ledit fournisseur d'échantillons IQ (110) est configuré pour extraire lesdits échantillons IQ complémentaires sur la base de signaux radio reçus au niveau de ladite station de base radio de support pour ladite cellule.

35. Station de base radio selon la revendication 33 ou 34, dans lequel ledit fournisseur d'échantillons IQ (110) comprend un extracteur (114) configuré pour extraire lesdits échantillons IQ complémentaires dans un sous-ensemble sélectionné de la bande de fréquence disponible (A) et/ou à partir d'un sous-ensemble sélectionné des antennes disponibles (B) .

36. Station de base radio selon la revendication 35, dans laquelle ledit extracteur (114) comprend un filtre de sous-canaux configuré pour extraire des échantillons IQ dans ledit sous-ensemble de la bande de fréquence disponible, et ledit groupe de multidiffusion est associé aux échantillons IQ extraits dans ledit sous-ensemble de la bande de fréquence disponible, et ledit sous-ensemble de la bande de fréquence disponible étant également réservé pour un sous-ensemble d'UE desservis par ladite station de base de desserte.

37. Station de base radio selon la revendication 36, dans laquelle ladite station de base radio (100) est configurée pour associer lesdits échantillons IQ complémentaires extraits dans ledit sous-ensemble de la bande de fréquence disponible avec ledit groupe de multidiffusion par attribution d'une adresse de multidiffusion dédiée audit sous-ensemble de la bande de fréquence disponible.

38. Station de base radio selon l'une quelconque des revendications 35-37, dans laquelle ledit extracteur (114) est configuré pour extraire lesdits échantillons IQ complémentaires pour un sous-ensemble sélectionné de porteuses disponibles.

39. Station de base selon l'une quelconque des revendications 33-38, dans laquelle ladite station de base radio (100) est configurée pour associer chacune d'un nombre de cellules à au moins un groupe de multidiffusion et ledit fournisseur d'échantillons IQ (110) est configuré pour extraire, pour chacun dudit au moins un groupe de multidiffusion, des échantillons IQ complémentaires dans un sous-ensemble respectif de la bande de fréquence disponible, et ledit transmetteur de multidiffusion (122) est configuré pour transmettre, via ladite interface réseau (124) audit réseau de transport, les échantillons IQ complémentaires dans le sous-ensemble respectif de la bande de fréquence disponible au groupe de multidiffusion associé.

40. Station de base radio selon l'une quelconque des revendications 33-39, dans laquelle ledit groupe de multidiffusion est un groupe de réseau local virtuel, VLAN, ou un groupe de multidiffusion à protocole Internet, IP, et ledit réseau de transport est un réseau Ethernet.
